(19) Europäisches Patentamt
European Patent Office
Office européen des brevets

(11) **EP 3 751 381 B1**

(12) **EUROPEAN PATENT SPECIFICATION**

(45) Date of publication and mention
of the grant of the patent:
**27.07.2022  Bulletin 2022/30**

(21) Application number: **19180068.9**

(22) Date of filing: **13.06.2019**

(51) International Patent Classification (IPC):
**G05D 23/19** *(2006.01)*      **F24F 11/00** *(2018.01)*
**F28F 27/00** *(2006.01)*      **F24F 11/49** *(2018.01)*
**F24F 11/85** *(2018.01)*      **F24F 140/20** *(2018.01)*

(52) Cooperative Patent Classification (CPC):
**G05D 23/1931; F24F 11/49; F24F 11/85;**
F24F 2140/20

(54) **FLOW CONTROL MODULE AND METHOD FOR CONTROLLING THE FLOW IN A HYDRONIC SYSTEM**

FLUSSSTEUERUNGSMODUL UND VERFAHREN ZUR STEUERUNG DES FLUSSES IN EINEM HYDRONISCHEN SYSTEM

MODULE DE COMMANDE D'ÉCOULEMENT ET PROCÉDÉ POUR RÉGULER L'ÉCOULEMENT DANS UN SYSTÈME HYDRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.12.2020  Bulletin 2020/51**

(73) Proprietor: **Grundfos Holding A/S
8850 Bjerringbro (DK)**

(72) Inventors:
• **TSOUVALAS, Agisilaos
  8850 Bjerringbro (DK)**

• **HILLERUP LYHNE, Casper
  8850 Bjerringbro (DK)**

(74) Representative: **Patentanwälte Vollmann Hemmer
Lindfeld
Partnerschaft mbB
Wallstraße 33a
23560 Lübeck (DE)**

(56) References cited:
**EP-A1- 2 918 961      US-A1- 2018 238 645**

**Description**

TECHNICAL FIELD

The present disclosure is directed to a flow control module and a method for controlling the flow in a hydronic system, in particular for use in a heating, ventilating, and air-conditioning (HVAC) system of a building.

BACKGROUND

Typically, hydronic systems are designed to operate at a design temperature differential ($\Delta T$) between a primary loop comprising thermal power source, e.g. a heater, a chiller, a heat exchanger and/or a common line coupling, and a secondary loop comprising a thermal power consuming load, e.g. a radiator and/or an air handling unit (AHU). It is known that hydronic systems may suffer from an undesirable effect known as the "low $\Delta T$ syndrome". For a variety of reasons such as dirty chiller coils or system components not designed for the same temperature differential, the actual temperature differential may fall below the design temperature differential, which leads to a less energy-efficient operation of the hydronic system.

US 8,774,978 B2 describes a water cooling system with a primary loop, a secondary loop and an intermediary decoupler or bypass connecting the primary loop and the secondary loop. Therein, the problems of the low $\Delta T$ syndrome are tackled by a demand flow device performing an event-based triggered re-adjustment of the new temperature differential supply setpoint. EP 2 918 961 A1 describes a method for controlling a flow of fluid through a heat exchanger. US 2018/238645 A1 describes a method for operating a heat exchanger.

SUMMARY

The flow control module according to the present disclosure provides a more efficient and stable solution to the low $\Delta T$ syndrome. For instance, new switched-in components replacing or supplementing other components of a hydronic system may result in a new design temperature differential that is not known or difficult to determine or estimate. The flow control module disclosed herein allows an efficient and stable operation of a hydronic system with an unknown, undefined or varying design temperature differential. The flow control module disclosed herein enables a continuous or regular adaptation of the current thermal power supply to the current thermal power demand and vice versa without controlling a temperature differential supply setpoint.

According to the invention, a flow control module for controlling the flow in a hydronic system is provided according to claim 1.

The temperature measurement is thus automatically calibrated "online" when the first and/or second situation arises. The term "calibrate" herein shall mean herein that a non-zero value based on a measurement in the first and/or second situation is used as an offset value to correct further measurements. In the first and/or second situation, the non-zero value must in fact be zero, so that it can be assumed that any non-zero value in the first and/or second situation is entirely based on sensor inaccuracies. Therefore, the non-zero value is "set" to zero by subtracting the non-zero value as an offset value for further measurements. Preferably, the calibration is automatically repeated every time the first and/or second situation arises. Alternatively, the calibration may be manually or automatically repeated periodically, e. g. only once a day or once a week, when the first and/or second situation arises.

Optionally, the flow control module may be configured to force the hydronic system, for calibration purposes, into the first situation and/or second situation by controlling the primary side flow actuator and/or the secondary side flow actuator. For instance, a primary side pump may be ramped up while the secondary side pump may be ramped down in order to establish a significant imbalance between the flow in the primary side compared to the secondary side. Alternatively, or in addition, a secondary side valve in the secondary side may be closed.

Optionally, the flow control module may be configured to identify the first situation and/or the second situation by comparing the first temperature differential with the second temperature differential.

Optionally, the flow control module may be configured to identify the first situation and/or the second situation when a certain pre-defined threshold on the absolute value of a signed deviation value between the first temperature differential and the second temperature differential is exceeded.

Optionally, the flow control module may be configured to adapt the thermal power transfer of the intermediary transfer element by controlling the primary side flow by means of the at least one controllable primary side flow actuator and/or the secondary side flow by means of the at least one controllable secondary side flow actuator in a continuous or regularly closed-loop manner based on minimising a signed deviation value being correlated with the thermal power transfer of the intermediary transfer element.

The term "thermal power" Q may be defined herein as $Q = \rho \cdot c \cdot q \cdot T$, wherein $\rho$ is the fluid density, c is the heat capacity of the fluid, q is the flow and the T is the temperature of the fluid. The term "thermal power transfer" by fluid flowing from a port A to a port B may be defined herein as a dimensionless variable $Q_B/Q_A$ ranging from 0 to 1, wherein $Q_A$ is the thermal power at port A and $Q_B$ is the thermal power at port B.

Optionally, the thermal power transfer of the intermediary transfer element from the first port to the second port and/or the thermal power transfer of the intermediary transfer element from the fourth port to the third port may be minimised by this continuous or regularly closed-loop control of the flow(s). Optionally, the thermal power transfer from the first port to the third port and/or the thermal power transfer from the fourth port to the second port may be maximised by this continuous or regularly closed-loop control of the flow(s). The controllable primary/secondary side flow actuator may for instance be a speed-controllable pump or a combination of a fixed-speed pump with a controllable valve. Controlling the primary/secondary side flow may thus comprise controlling the speed of a primary/secondary side pump and/or the opening degree of a primary/secondary side valve. As alternatives to controlling a pump speed, the power consumption, the stator flux and/or stator current of the pump's electric motor may be controlled to control the flow(s). It should be understood that the hydronic system may comprise a group of two or more intermediary transfer elements.

The hydronic system may be a heating and/or cooling system. The source element may be a heater, a chiller, a heat exchanger and/or a common line coupling consuming chemical, thermal, mechanical or electrical energy for providing thermal power to the primary side of the hydronic system. The load element may be a fan coil unit (FCU), an air handling unit (AHU), an anti-condensate baffle (ACB), a ceiling cooling, a radiator, an underfloor heating, or the like, consuming thermal power at the secondary side of the hydronic system for providing it to a place or object in need for thermal power, i.e. heating or cooling.

The intermediary transfer element may be a common line, also known as "decoupler", decoupling the flow in the primary side from the flow in the secondary side. For instance, when a load valve (e.g. a radiator thermostat) in the secondary side may be closed due to low demand for thermal power, a flow in the primary side may continue through the common line. The common line may also be denoted as "bypass" or "shunt", because the flow in the primary side is able to bypass a load element in the secondary side via the common line. Another name for the common line is "close Tees", because the schematic representation of the common line may resemble two letters "T" being connected with their legs. One end of the common line may be a first T-connection connecting the first and the third port, and the other end of the common line may be a second T-connection connecting the fourth and the second port. Optionally, the intermediary transfer element may be a heat exchanger thermally coupling the primary side and the secondary side in a parallel flow or counter flow configuration. Optionally, the intermediary transfer element may be a hydraulic separator or a tank. A hydraulic separator or a tank may be regarded as a wide common line with heat exchanger functionality. In case of a common line, a hydraulic separator or a tank, the pressure of the primary side may be decoupled from the pressure in the secondary side by means of pressure valves. In case of a heat exchanger, the primary side and the secondary side may be fully decoupled in terms of pressure without the need of decoupling pressure valves. As the fluid in the primary side does not mix in the heat exchanger with the fluid of the secondary side, different fluids may be used in the primary side and in the secondary side. However, most preferably, water is used as the fluid in both the primary side and the secondary side.

The term "closed-loop control" shall mean that the signed deviation value is used as a feedback value to be minimised by adapting the flow(s). The signed deviation value is correlated with the thermal power transfer of the intermediary transfer element and influenced by the flow(s). The flow control module may thus be denoted as a feedback controller. The signed deviation value may be received and/or determined by the flow control module based on one or more measured variables. The closed-loop control is not event-triggered, but essentially continuous or regularly, which means that, also during "stable" operation of the hydronic system, the flow control module receives and/or determines essentially continuously or regularly the signed deviation value and adapts essentially continuously or regularly the flow(s) accordingly. The flow(s) may stabilise when the signed deviation value is close to or at a minimum.

The closed-loop control of the flow(s) on the basis of the signed deviation value as feedback thus reduces or prevents the negative effects of the low $\Delta T$ syndrome very efficiently. No event-based recalibration to a new design temperature differential is needed. As the signed deviation value is correlated with the thermal power transfer of the intermediary transfer element, the closed-loop control quickly adapts the flow(s) so that a low $\Delta T$ syndrome does not establish in the first place. The flow control module disclosed herein allows the design temperature differential of the hydronic system to be unknown or undefined. For instance, a new component configured for an unknown or other design temperature differential than the hydronic system may be installed in the hydronic system without causing a low $\Delta T$ syndrome. This gives far more flexibility for maintaining and/or extending the hydronic system by replacing or adding components. Furthermore, the current thermal power supply is adapted to the current thermal power demand and vice versa without controlling a temperature differential supply setpoint.

Optionally, the signed deviation value may be a difference between a first differential and a second differential, wherein the first differential is a differential between any two measured variables of a group of four variables and the second differential is a differential between the other two measured variables of said group of four variables, wherein the group of four variables comprises a first variable of fluid flowing through the first port, a second variable of fluid flowing through the second port, a third variable of fluid flowing through the third port, and a fourth variable of fluid flowing through the fourth port. Optionally, the first variable may be the temperature $T_1$ and/or pressure $p_1$ of fluid flowing through the first port, the second variable may be the temperature $T_2$ and/or pressure $p_2$ of fluid flowing through the second port, the third variable may be the temperature $T_3$ and/or pressure $p_3$ of fluid flowing through the third port, and the fourth variable may be the temperature $T_4$ and/or pressure $p_4$ of fluid flowing through the fourth port.

The first differential may for instance be $\Delta T_1 = T_1 - T_4$ or $\Delta T_1 = T_1 - T_3$ or $\Delta T_1 = T_3 - T_4$, and the second differential may for instance be $\Delta T_2 = T_3 - T_2$ or $\Delta T_2 = T_2 - T_4$ or $\Delta T_2 = T_1 - T_2$, respectively. Analogously, in case of a common line as the intermediary transfer element, the first differential may for instance be $\Delta p_1 = p_1 - p_4$ or $\Delta p_1 = p_1 - p_3$ or $\Delta p_1 = p_3 - p_4$, and the second differential may for instance be $\Delta p_2 = p_3 - p_2$ or $\Delta p_2 = p_2 - p_4$ or $\Delta p_2 = p_1 - p_2$, respectively. In case of a heat exchanger as the intermediary transfer element, the primary side pressure is fully decoupled from the secondary side pressure, wherein the first differential may for instance be $\Delta p_1 = p_1 - p_2$ and the second differential may for instance be $\Delta p_2 = p_3 - p_4$. The signed deviation value may be $\Delta \Delta T = \Delta T_2 - \Delta T_1$ or $\Delta \Delta p = \Delta p_2 - \Delta p_1$.

The thermal transfer between the first port and the third port and/or the thermal transfer between the fourth port and the second port may be denoted as a thermal transfer "across" the intermediary transfer element, whereas the thermal transfer between the first port and the second/fourth port and/or the thermal transfer between the fourth port and the first/third port may be denoted as a thermal transfer "along" the intermediary transfer element. By adapting the flow(s), the thermal transfer across the intermediary transfer element may be maximised, whereas the thermal transfer along the intermediary transfer element may be minimised. The signed deviation value $\Delta \Delta T$ and/or $\Delta \Delta p$ may be correlated with the thermal transfer along the intermediary transfer element.

In case of a common line as the intermediary transfer element, a negative deviation value $\Delta \Delta T$ and/or $\Delta \Delta p$ may be representative for a flow along the common line from the fourth port to the third port. Such a "negative" flow is undesirable, because the "temperature lift" between the first port and third port would be reduced, resulting in an aggravation of a low $\Delta T$ syndrome. Analogously, a positive deviation value $\Delta \Delta T$ and/or $\Delta \Delta p$ may be representative for a flow along the common line from the first port to the second port. Such a "positive" flow is also undesirable, because the thermal capacity of the primary side is not fully used.

In case of a very efficient heat exchanger as the intermediary transfer element, a negative deviation value $\Delta \Delta T$ and/or $\Delta \Delta p$ may be representative for a lack of thermal transfer across the heat exchanger from the first port to the third port. This is undesirable, because the "temperature lift" between the first port and third port would be reduced, resulting in an aggravation of a low $\Delta T$ syndrome. Analogously, a positive deviation value $\Delta \Delta T$ and/or $\Delta \Delta p$ may be representative for an abundance of thermal transfer along the heat exchanger from the first port to the second port. Such a thermal transfer is also undesirable, because the thermal capacity of the primary side is not fully used.

Optionally, the signed deviation value may be a difference between a measured or determined flow q in a common line as the intermediary transfer element and a pre-determined common line reference flow, preferably a zero common line flow. For instance, a flow meter in the common line may provide a measured flow variable q. Alternatively or in addition, the flow in the common line may be determined by a pressure differential along the common line. For instance, a first pressure sensor may be placed between the first port and the third port and a second pressure sensor may be placed between the second port and the fourth port. After a calibration of the pressure differential between the two pressure sensors for zero flow, the pressure differential may be used as the signed deviation value. The primary/secondary flow(s) may be adapted to keep the flow in the common line to a minimum. There is no need for a check valve preventing a negative flow q from the fourth port to the third port.

Optionally, the signed deviation value may be a difference between a flow differential in a heat exchanger as the intermediary transfer element and a pre-determined reference heat exchanger differential flow, preferably a zero heat exchanger differential flow. For instance, a first flow meter in the primary side a may provide a first measured flow variable $q_1$ and a second flow meter in the secondary side a may provide a second measured flow variable $q_2$, wherein the signed deviation value may be a flow differential $\Delta q = q1 - q2$. The primary/secondary flow(s) may be adapted to keep the flow differential $\Delta q$ to a minimum.

Optionally, the flow control module may be configured to maintain a current primary side flow if the signed deviation value is between a negative reference value and a positive reference value, preferably essentially zero. The negative reference value and a positive reference value may be predetermined low values between which the thermal power transfer along the intermediary transfer element is sufficiently small, i.e. the thermal power transfer across the intermediary transfer element is sufficiently large. This situation may be regarded as a stable operation with the current primary side flow. The current secondary side flow may also be maintained. However, other control schemes, such as a building management system, a radiator thermostat or a manual AHU switch may open/close one or more load valves indicating a higher/lower demand for thermal power at a load element. Such other control schemes may command a higher/lower secondary side flow. For instance, an internal automatic pump controller of a secondary side pump may establish a corresponding target pressure/flow by increasing/decreasing the speed of the secondary side pump. Despite of a high thermal power demand, the control module disclosed herein may overrule such an underlying control scheme to decrease the secondary side flow for a minimum of the signed deviation value. However, as long as the signed deviation value is above the negative reference value, the flow control module may allow an internal automatic pump controller of a secondary side pump to increase the speed of the secondary side pump in order to establish a target pressure and flow in the secondary side to meet the thermal power demand of the load element.

Optionally, the flow control module may be configured to increase the primary side flow if the signed deviation value is below a negative reference value. In case of a common line, this undesirable "negative" flow spoiling the temperature lift across the common line is tackled by a higher thermal power supply to the intermediary transfer element via the first port. However, this increase of thermal power supply may be limited a maximum primary side pump speed, a maximum primary side valve opening and/or the maximum capacity of the source element(s). Therefore, the flow control module may be configured to maintain the primary side flow if the signed deviation value is below a negative reference value and the primary side flow is above a predetermined maximum threshold. The predetermined maximum threshold may be defined by a maximum primary side pump speed, a maximum primary side valve opening or a maximum capacity of the source element(s).

In one embodiment of the flow control module disclosed herein, only the primary side flow is controlled by the flow control module. As long as the signed deviation value is above a positive reference value, the flow control module decreases the primary side flow until a minimum primary side flow is reached. A minimum primary side flow may, for instance, be a predetermined value defined by the source element(s) that may require a minimal primary flow.

Optionally, the flow control module may be configured to maintain a current primary side flow if the signed deviation value is above a positive reference value and the flow in the primary side is below a predetermined minimum threshold. Such a situation may be denoted as a stable "low demand operation", wherein the thermal transfer along the intermediary transfer element between the first port and the second port is minimised.

In another embodiment of the flow control module disclosed herein, only secondary side flow is controlled by the flow control module. In yet another embodiment of the flow control module disclosed herein, both the primary and secondary side flows are controlled by the flow control module. If the secondary side flow is controllable by the flow control module, the flow control module may be configured to decrease the secondary side flow if the signed deviation value is below a negative reference value and the primary side flow cannot be increased. The increase of the primary side flow may be limited by a primary side pump already running at maximum speed, a primary side valve being already fully opened, or a maximum capacity of the source element(s). Another reason could be that the primary side flow may not be controllable by the flow control module in the first place. Such a decrease of the secondary side flow may be conflicting with an underlying internal automatic pump controller of a secondary side pump aiming for a target pressure and flow, because the secondary side flow is reduced when the thermal power demand of the load element(s) is not met by the thermal power supply of the source element(s). However, reducing the secondary side flow increases in this case the thermal power transfer across the intermediary transfer element from the first port to the third port. Thus, the load element(s) are provided with the maximum available thermal power by a reduced secondary side flow. Despite of a high thermal power demand in the secondary side, the flow control module overrules any underlying control scheme in order to decrease the secondary side flow for a minimum of the signed deviation value. However, as long as the signed deviation value is above the negative reference value, the flow control module may allow an internal automatic pump controller of a secondary side pump to increase the speed of the secondary side pump in order to establish a target pressure and flow in the secondary side to meet the thermal power demand of the load element.

Optionally, the flow control module may be integrated in one of the at least one controllable primary side flow actuator and/or one of the at least one controllable secondary side flow actuator. Alternatively, or in addition, the flow control module may be integrated in a cloud-based computer system and/or a building management system (BMS).

According to the invention, a method is also provided according to claim 14.

Optionally, the method may further comprise a step of forcing the hydronic system into the first situation and/or second situation by controlling the primary side flow actuator and/or the secondary side flow actuator prior to the calibrating steps.

Optionally, the method may further comprise a step of identifying the first situation and/or the second situation by comparing the first temperature differential with the second temperature differential.

Optionally, the first situation and/or the second situation may be identified when a certain pre-defined threshold on the absolute value of a signed deviation value between the first temperature differential and the second temperature differential is exceeded.

Optionally, the method may further comprise a step of adapting the thermal power transfer of the intermediary transfer element by controlling the primary side flow by means of the at least one controllable primary side flow actuator and/or the secondary side flow by means of the at least one controllable secondary side flow actuator unit in a continuous or regularly closed-loop manner based on minimising a signed deviation value being correlated with the thermal power transfer of the intermediary transfer element.

Optionally, the signed deviation value may be a difference between a first differential and a second differential, wherein the first differential is a differential between any two measured variables of a group of four variables and the second differential is a differential between the other two measured variables of said group of four variables, wherein the group of four variables comprises a first variable of fluid flowing through the first port, a second variable of fluid flowing through the second port, a third variable of fluid flowing through the third port, and a fourth variable of fluid flowing through the fourth port.

Optionally, the first variable may be the temperature and/or pressure of fluid flowing through the first port, the second variable is the temperature and/or pressure of fluid flowing through the second port, the third variable is the temperature and/or pressure of fluid flowing through the third port, and the fourth variable is the temperature and/or pressure of fluid flowing through the fourth port.

Optionally, the signed deviation value may be a difference between a measured flow in a common line as the intermediary transfer element and a pre-determined common line reference flow, preferably a zero common line flow. Alternatively, a flow in a common line may be determined by a pressure differential along the intermediary transfer element between a first pressure sensor placed between the first port and the third port and a second pressure sensor placed between the second port and fourth port. Such a pressure differential may be calibrated for zero flow and then be used as the signed deviation value.

Optionally, the signed deviation value may be a difference between a flow differential in a heat exchanger as the intermediary transfer element and a pre-determined reference heat exchanger differential flow, preferably a zero heat exchanger differential flow. The flow differential being used as the signed deviation value may be the difference between the primary side flow and the secondary side flow.

Optionally, a current primary side flow may be maintained if the signed deviation value is between a negative reference value and a positive reference value, preferably essentially zero.

Optionally, the primary side flow may be increased if the signed deviation value is below a negative reference value.

Optionally, the primary side flow may be maintained if the signed deviation value is below a negative reference value and the primary side flow is above a predetermined maximum threshold.

Optionally, the secondary side flow may be decreased if the signed deviation value is below a negative reference value and the primary side flow cannot be increased.

Optionally, the primary side flow may be decreased if the signed deviation value is above a positive reference value.

Optionally, a current primary side flow may be maintained if the signed deviation value is above a positive reference value and the flow in the primary side is below a predetermined minimum threshold.

The method disclosed herein may be implemented in form of compiled or uncompiled software code that is stored on a computer readable medium with instructions for executing the method. Alternatively, or in addition, the method may be executed by software in a cloud-based system and/or a building management system (BMS), e.g. in the flow control module disclosed herein.

SUMMARY OF THE DRAWINGS

Embodiments of the present disclosure will now be described by way of example with reference to the following figures of which:

Fig. 1 shows a schematic figure of an example of an embodiment of a hydronic system according to the present disclosure,

Fig. 2 shows a schematic figure of an example of another embodiment of a hydronic system according to the present disclosure,

Fig. 3 shows a schematic figure of an example of yet another embodiment of a hydronic system according to the present disclosure,

Fig. 4 shows a schematic figure of an example of yet another embodiment of a hydronic system according to the present disclosure,

Fig. 5 shows a schematic figure of an example of yet another embodiment of a hydronic system according to the present disclosure,

Fig. 6 shows a schematic figure of an example of yet another embodiment of a hydronic system according to the present disclosure,

Fig. 7 shows a schematic figure of an example of yet another embodiment of a hydronic system according to the present disclosure,

Fig. 8 shows a schematic figure of an example of yet another embodiment of a hydronic system according to the present disclosure,

Fig. 9 shows a schematic figure of an example of yet another embodiment of a hydronic system according to the present disclosure,

Fig. 10 shows a schematic figure of an example of an embodiment of an intermediary transfer element hydronic system according to the present disclosure, and

Fig. 12 shows a schematic figure of an example of the method for controlling the flow in a hydronic system according to the present disclosure.

DETAILED DESCRIPTION

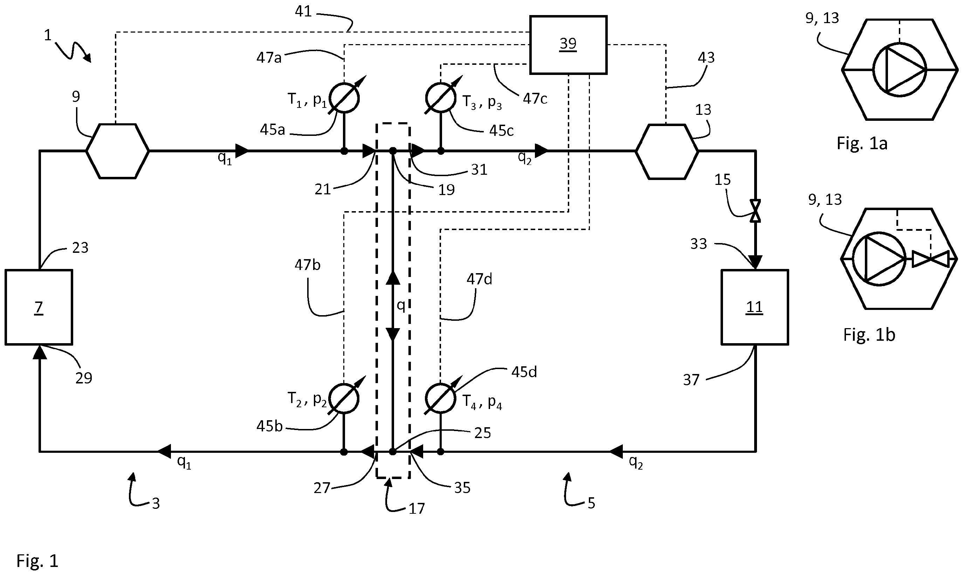

Fig. 1 shows a hydronic system 1 having a primary side 3 and a secondary side 5. The hydronic system 1 can be a heating or cooling system. The primary side 3 comprises a source element 7, which may for instance be a heater, chiller, a heat exchanger or a common line coupling. The source element 7 provides thermal power by heating up or chilling down a fluid circulating in the primary side 3. The fluid may be water or a coolant with high thermal capacity. The fluid is driven through the primary side 3 by a controllable primary side flow actuator 9 for providing a primary side flow $q_1$. The secondary side 5 comprises a load element 11, which may for instance be a radiator or an air handling unit (AHU). The load element 11 consumes thermal power provided by the fluid circulating in the secondary side 5 and provides it to a place or object in need for thermal power. The fluid is driven through the secondary side 5 by a controllable secondary side flow actuator 13 for providing a secondary side flow $q_2$. The secondary side 5 comprises a load valve 15, which may be a motorised valve, a balancing valve, a check valve, a thermostat or another valve to limit the flow in the secondary side 5. Fig. 1a shows an embodiment wherein the controllable primary side flow actuator 9 and/or the controllable secondary side flow actuator 13 are speed-controllable pump(s). Fig. 1b shows an alternative embodiment wherein the controllable primary side flow actuator 9 and/or the controllable secondary side flow actuator 13 are fixed-speed pump(s) in combination with controllable valve(s).

The hydronic system 1 further comprises an intermediary transfer element 17 in form of a common line (or hydraulic separator or tank) between the primary side 3 and the secondary side 5. A first T-end 19 of the intermediary transfer element 17 is connected to a first port 21 of the primary side 3, the first port 21 being in fluid connection with an output 23 of the source element 7. A second T-end 25 of the intermediary transfer element 17 is connected to a second port 27 of the primary side 3, the second port 27 being in fluid connection with an input 29 of the source element 7. The first T-end 19 of the intermediary transfer element 17 connects the first port 21 of the primary side 3 with a third port 31 of the secondary side 5, the third port 31 being in fluid connection with an input 33 of the load element 11. The second T-end 25 of the intermediary transfer element 17 connects the second port 21 of the primary side 3 with a fourth port 35 of the secondary side 5, the fourth port 35 being in fluid connection with an output 37 of the load element 11.

In principle, the intermediary transfer element 17 in form of a common line allows for a fluid flow (downward in Figs. 1, 4 and 5) from the first port 21 of the primary side 3 to the second port 27 of the primary side 3. Such a "positive" primary side flow downward along the common line may for instance be required when the thermal power demand of the load element 11 is low and the load valve 15 is closed. Likewise, the intermediary transfer element 17 also allows for a fluid flow (upward in Figs. 1, 4 and 5) from the fourth port 35 of the secondary side 5 to the third port 31 of the secondary side 5. Such a "negative" secondary side flow upward along the common line may for instance be required when the thermal power supply by the primary side 3 is exceeded by a high thermal power demand of the load element 11 with the load valve 15 being fully opened. However, despite the principle possibility for a positive and negative flow through the common line, a flow through the common line is not desirable, because a negative flow aggravates a low ΔT syndrome and a positive flow does not efficiently use the thermal power capacity of the source element 7.

Therefore, in order to minimise the flow in the common line, the hydronic system 1 comprises a flow control module 39 for controlling the primary side flow $q_1$ and/or the secondary side flow $q_2$. The flow control module 39 may be integrated in the controllable primary side flow actuator 9 and/or the controllable secondary side flow actuator 13. Alternatively, or in addition, the flow control module 39 may be integrated in a cloud-based computer system and/or a building management system (BMS). The flow control module 39 may control the primary/secondary side flow $q_{1,2}$ by means of controlling the speed of a speed-controllable primary/secondary side pump (see Fig. 1a) and/or by controlling the opening degree of a controllable primary/secondary side valve in combination with a fixed-speed primary/secondary side pump (see Fig. 1b).

The flow control module 39 may have a wired or wireless first signal connection 41 with the controllable primary side flow actuator 9 and/or a wired or wireless second signal connection 43 with the controllable secondary side flow actuator 13. If the secondary side flow $q_2$ is not controllable by the flow control module 39, the second signal connection 43 is not needed (in Figs. 1 to 6). Likewise, if the primary side flow $q_1$ is not controllable by the flow control module 39, the first signal connection 41 is not needed (in Figs. 1 to 6). For instance, either the controllable primary side flow actuator 9 or the controllable secondary side flow actuator 13 may comprise a fixed-speed pump without a controllable primary/secondary side valve. However, in the examples shown in Figs. 1 to 6, both the primary side flow $q_1$ and the secondary side flow $q_2$ are controllable by means of the flow control module 39.

The hydronic system 1 as shown in Fig. 1 further comprises a group of four sensors 45a-d with a first temperature or pressure sensor 45a being arranged and configured to determine the temperature $T_1$ or pressure $p_1$ of the fluid flowing through the first port 21, a second temperature or pressure sensor 45b being arranged and configured to determine the temperature $T_2$ or pressure $p_2$ of the fluid flowing through the second port 27, a third temperature or pressure sensor 45c being arranged and configured to determine the temperature $T_3$ or pressure $p_3$ of the fluid flowing through the third port 31, and a fourth temperature or pressure sensor 45d being arranged and configured to determine the temperature $T_4$ or pressure $p_4$ of the fluid flowing through the fourth port 35. Each of the sensors 45a-d has a wired or wireless signal connection 47a-d with the flow control module 39. The flow control module 39 receives the respective measured temperatures or pressures via the signal connections 47a-d. The sensors 45a-d may alternatively be signal connected with the flow control module 39 via a data bus.

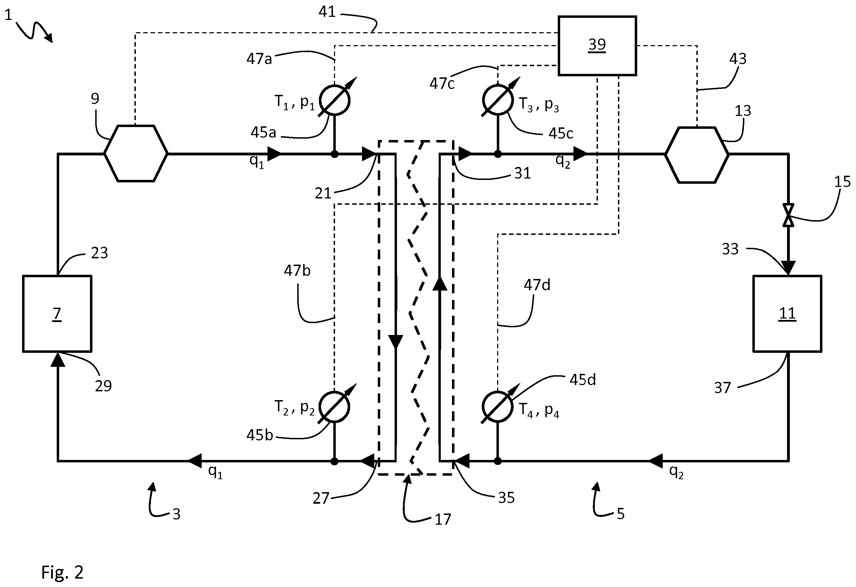

The flow control module 39 is configured to continuously or regularly monitor the measured temperatures $T_{1-4}$ or pressures $p_{1-4}$ in order to control the flow(s) $q_1$, $q_2$ in a continuous or regularly closed-loop manner based on minimising a signed deviation value $\Delta\Delta T$ or $\Delta\Delta P$ being correlated with the thermal power transfer of the intermediary transfer element 17. The signed deviation value $\Delta\Delta T$ or $\Delta\Delta P$ may be determined by the flow control module 39 and may be a difference between a first differential $\Delta T_1$ or $\Delta p_1$ and a second differential $\Delta T_2$ or $\Delta p_2$. In case of sensors 45a-d being temperature sensors, the first differential may for instance be $\Delta T_1=T_1-T_4$ or $\Delta T_1=T_1-T_3$ or $\Delta T_1=T_3-T_4$, and the second differential may for instance be $\Delta T_2=T_3-T_2$ or $\Delta T_2=T_2-T_4$ or $\Delta T_2=T_1 T_2$, respectively. Analogously, in case of a common line being the intermediary transfer element 17 (see Figs. 1, 4 and 5) and the sensors 45a-d being pressure sensors, the first differential may for instance be $\Delta p_1=p_1-p_4$ or $\Delta p_1=p_1-p_3$ or $\Delta p_1=p_3-p_4$, and the second differential may for instance be $\Delta p_2=p_3-p_2$ or $\Delta p_2=p_2-p_4$ or $\Delta p_2=p_1-p_2$, respectively. In case of a heat exchanger being the intermediary transfer element 17 (see Figs. 2, 3 and 6) and the sensors 45a-d being pressure sensors, the primary side pressure is fully decoupled from the secondary side pressure, wherein the first differential may for instance be $\Delta p_1=p_1-p_2$ and the second differential may for instance be $\Delta p_2=p_3-p_4$. The signed deviation value may be $\Delta\Delta T=\Delta T_2-\Delta T_1$ or $\Delta\Delta p=\Delta p_2-\Delta p_1$.

The current primary side flow $q_1$ is maintained by the flow control module 39 if the signed deviation value $\Delta\Delta T$ or $\Delta\Delta P$ is between a negative reference value and a positive reference value, preferably essentially zero. The negative reference value and a positive reference value may define a band around zero, within which a fluid flow q through the common line is sufficiently low. In other words, the thermal power transfer along the intermediary transfer element 17 (upward between the fourth port 35 and the third port 31 or downward between the first port 21 and the second port 27) is minimal, whereas the thermal power transfer across the intermediary transfer element 17 (from the first port 21 to the third port 31 and from the fourth port 35 to the second port 27) is maximal. This is a stable and desirable operation of the hydronic system 1.

Once the signed deviation value $\Delta\Delta T$ or $\Delta\Delta P$ falls below the negative reference value, however, a negative flow q upward along the common line is indicated. If the flow control module 39 is able to control the primary side flow $q_1$, the flow control module 39 immediately reacts to such a feedback in a closed-loop manner by increasing the primary side flow $q_1$. As a consequence, the negative deviation value $\Delta\Delta T$ or $\Delta\Delta P$ should rise above the negative reference value, i.e. the negative flow q upward along the common line should reduce or stop. A stable and desirable operation at a higher primary side flow $q_1$ may thus be established.

If the negative deviation value $\Delta\Delta T$ or $\Delta\Delta P$ does not rise above the negative reference value, the primary side flow $q_1$ is increased until it cannot be increased anymore, e. g. when a maximum primary side pump speed or maximum primary side valve opening is reached, or until the primary side flow $q_1$ has reached a predetermined maximum threshold $q_{max}$. In this situation and in case the primary side flow $q_1$ is not controllable by the flow control module 39 in the first place, the secondary side flow $q_2$ is decreased. It should be noted that such a decrease may seem counter-intuitive, because the load element 11 demands more thermal power than it gets through the fully opened load valve 15. Normally, an internal automatic secondary side pump controller would react with an increase of speed to an opening of the load valve 15 in order to establish a target pressure and flow in the secondary side 5. However, the flow control module 39 may overrule such an internal automatic secondary side pump controller and may command a decrease of the secondary side flow $q_2$ in case of a negative common line flow q in order to maximise the available thermal power transfer across the intermediary transfer element 17. In this situation, the supply of thermal power by the primary side 3 is either at its maximum or uncontrollable by the flow control module 39. As long as the signed deviation value $\Delta\Delta T$ or $\Delta\Delta P$ is above the negative reference value, the flow control module 39 may allow an internal automatic secondary side pump controller to increase the secondary side flow $q_2$ in order to establish a target pressure and flow in the secondary side 5 to meet the thermal power demand of the load element 11 indicated by the opened load valve 15.

In case the load element 11 has a low demand for thermal power and the load valve 15 is at least partly closed, for instance, the situation may occur that the signed deviation value $\Delta\Delta T$ or $\Delta\Delta P$ rises above the positive reference value, which indicates a positive flow q downward along the common line. If the flow control module 39 is able to control the primary side flow $q_1$, the flow control module 39 immediately reacts to such a feedback in a closed-loop manner by decreasing the primary side flow $q_1$. As a consequence, the positive deviation value $\Delta\Delta T$ or $\Delta\Delta P$ should fall below the positive reference value, i.e. the positive flow q downward along the common line should reduce or stop. A stable and desirable operation at a lower primary side flow $q_1$ may thus be established.

If the positive deviation value $\Delta\Delta T$ or $\Delta\Delta P$ does not fall below the positive reference value, the primary side flow $q_1$ is decreased until it cannot be decreased anymore, e.g. when a minimum primary side pump speed or minimum primary side valve opening is reached, or until the primary side flow $q_1$ has reached a predetermined minimum threshold $q_{min}$. Once a minimum primary side flow $q_1=q_{min}$ is reached, the primary side flow $q_1$ is maintained and a stable low demand operation is established with a minimal acceptable positive flow q downward along the common line.

Fig. 2 shows an embodiment with the intermediary transfer element 17 being a counter-flow heat exchanger. The primary side 3 and the secondary side 5 are completely decoupled in terms of pressure. There may even be different fluids running through the primary side 3 and the secondary side 5, because there is no mixing between the primary side 3 and the secondary side 5. The controlling of the flow actuator(s) 9, 13 is identical to Fig. 1. The flow control module 39 may not even be able to distinguish whether the intermediary transfer element 17 is a common line or a very efficient heat exchanger.

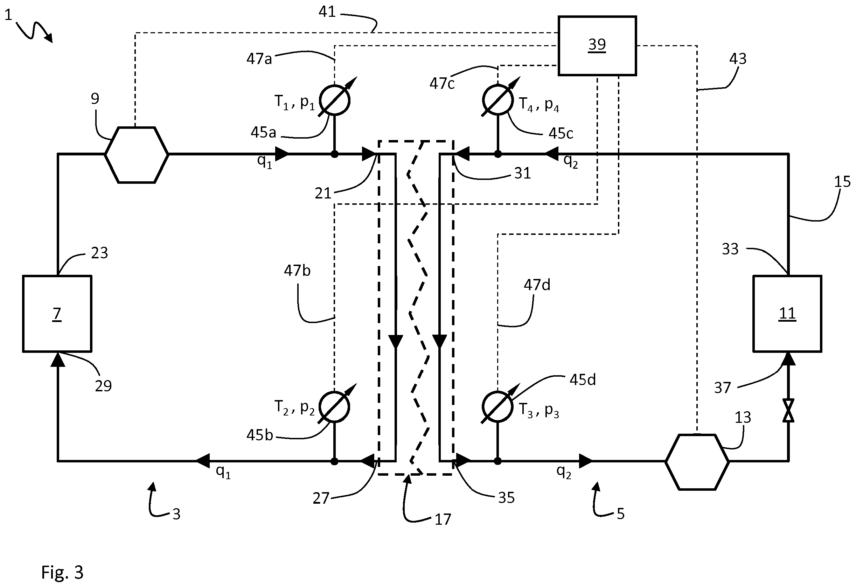

Fig. 3 shows an embodiment with the intermediary transfer element 17 being a parallel-flow heat exchanger. The only difference is the direction of the secondary side flow $q_2$, so the position of the third port 31 and the third sensor 45c is swapped with the position of the fourth port 35 and the fourth sensor 45d. The controlling of the flow actuator(s) 9, 13 is identical to Figs. 1 and 2.

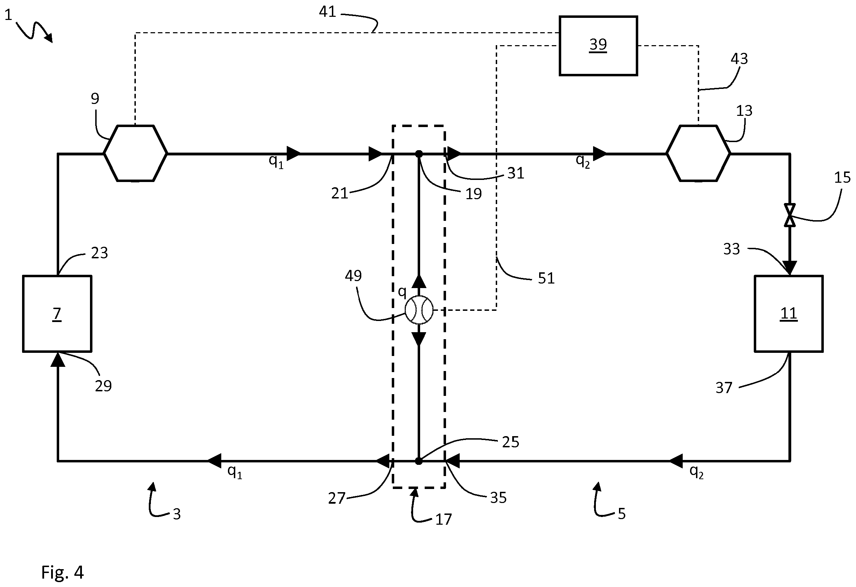

Fig. 4 shows an embodiment with the intermediary transfer element 17 again being a common line or a hydraulic separator or a tank. However, instead of the group of four temperature or pressure sensors 45a-d, just one bi-directional flow meter 49 is installed in the common line for measuring the flow q along the common line. The flow control module 39 is signal connected to the flow meter 49 via a wired or wireless signal connection 51 for receiving the measured common line flow. The common line flow q is then used as the signed deviation value to be minimised. With the measured common line flow q being the signed deviation value, the controlling of the flow(s) $q_1$, $q_2$ is identical to Figs. 1 to 3.

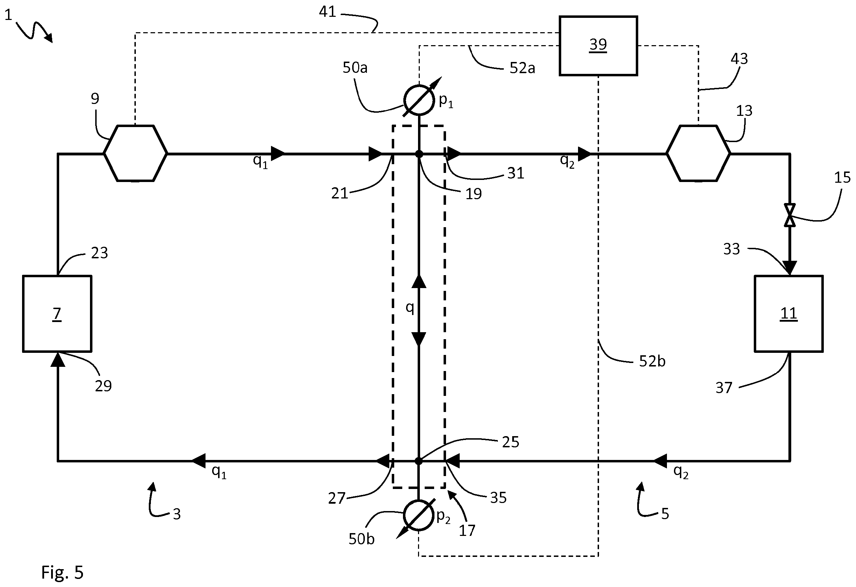

Fig. 5 shows an embodiment similar to Fig. 4, wherein the common line flow q is not measured by a flow meter, but determined from a pressure differential along the common line. Therefore, a first pressure sensor 50a is located at the first T-end 19 of the intermediary transfer element 17 between the first port 21 of the primary side 3 and the third port 31 of the secondary side 5. The flow control module 39 is signal connected to the first pressure sensor 50a via a wired or wireless signal connection 52a for receiving a first pressure value $p_1$. A second pressure sensor 50b is located at the second T-end 25 of the intermediary transfer element 17 between the second port 27 of the primary side 3 and the fourth port 35 of the secondary side 5. The flow control module 39 is signal connected to the second pressure sensor 50b via a wired or wireless signal connection 52b for receiving a second pressure value $p_2$. Once the pressure differential $\Delta p=p_1-p_2$ is determined by the flow control module 39 and calibrated for zero flow q, it can be used as the signed deviation value. With the pressure differential $\Delta p$ being the signed deviation value, the controlling of the flow(s) $q_1$, $q_2$ is identical to Figs. 1 to 4.

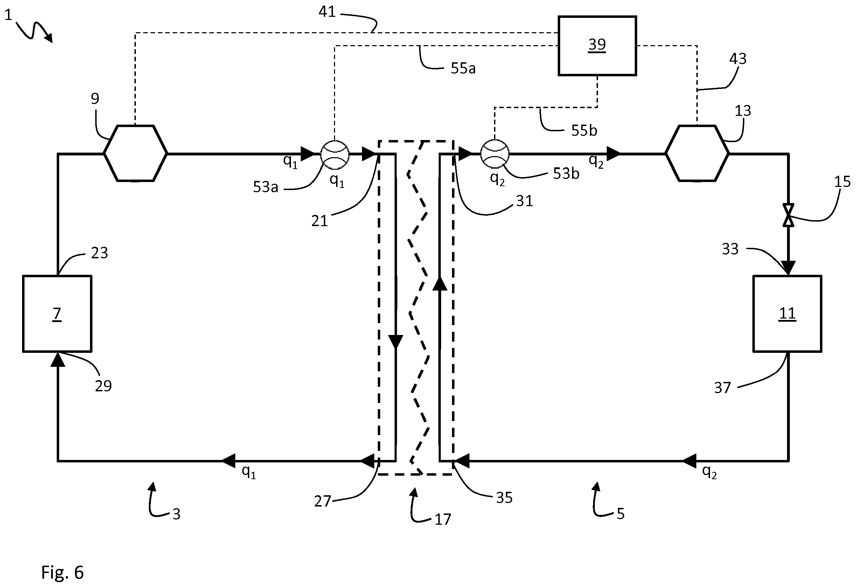

Fig. 6 shows an embodiment with the intermediary transfer element 17 again being a counter-flow heat exchanger. However, instead of the group of four temperature or pressure sensors 45a-d, a first flow meter 53a is installed in the primary side 3 for measuring the primary side flow $q_1$ and a second flow meter 53b is installed in the secondary side 5 for measuring the secondary side flow $q_2$. The flow control module 39 is signal connected to the flow meters 53a,b via wired or wireless signal connections 55a,b, respectively, for receiving the measured flows $q_1$, $q_2$. The flow control module 39 determines a flow differential $\Delta q=q1-q2$ and uses the flow differential $\Delta q$ as the signed deviation value to be minimised. With the flow differential $\Delta q$ being the signed deviation value, the controlling of the flow(s) $q_1$, $q_2$ is identical to Figs. 1 to 5.

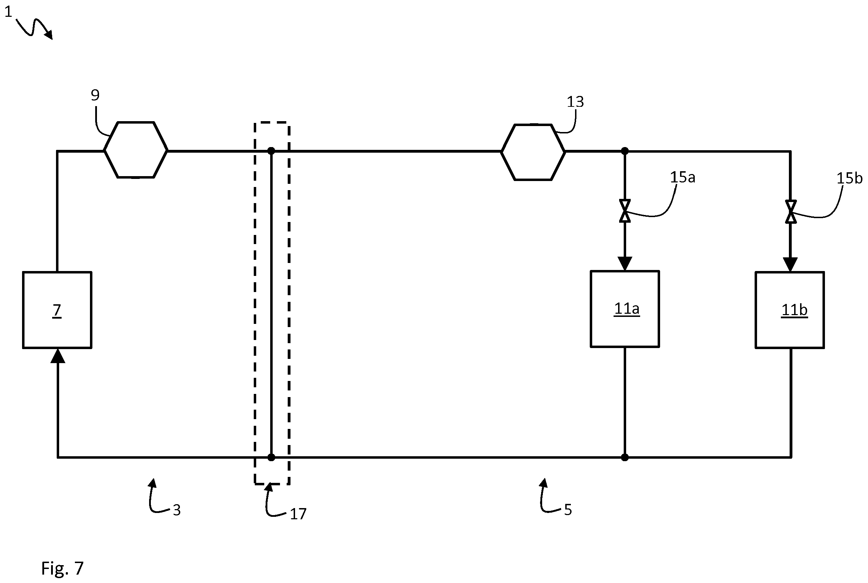

In Figs. 7 to 9, the control module 39, the signal connections 45a-d, 51, 52a,b, 55a,b and the sensors 45a-d, 49, 50a,b, 53a,b are not shown and the intermediary transfer element 17 is only shown as a common line for simplicity. It should be understood that any of the embodiments shown in Figs. 1 to 6 are applicable to any hydronic system topology shown in Figs. 7 to 9. The topology of the hydronic system 1 shown in Fig. 7 shows a plurality of two load elements 11a,b in parallel in the secondary side 5. Here, just one controllable secondary side flow actuator 13 drives the secondary side flow through both load elements 11. At least one valve 15a,b is associated with each load element 11a,b for restricting the secondary side flow through the respective load element 11a,b.

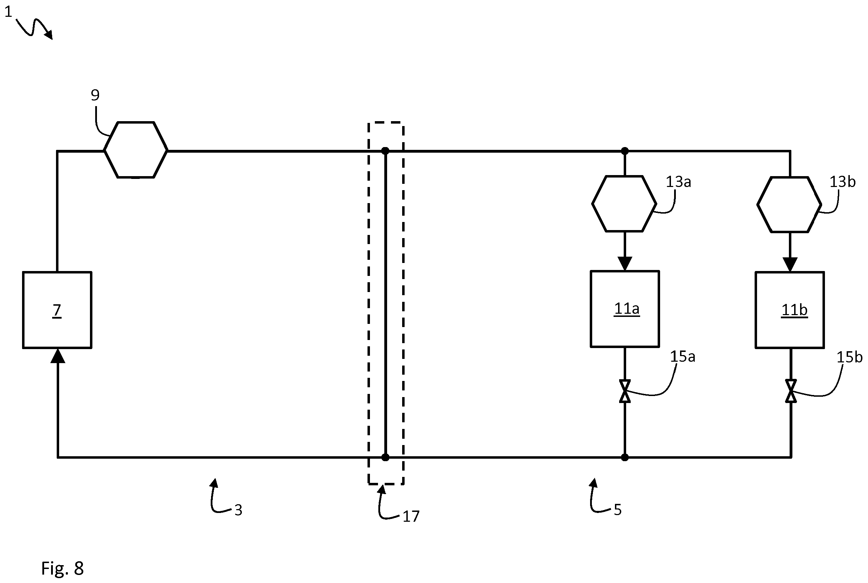

The system topology shown in Fig. 8 comprises a plurality of two parallel controllable secondary side flow actuators 13a,b, each of which is associated with a load element 1 1a,b. There are several options for controlling the respective secondary side flows through the load elements 1 1a,b. A first option would be controlling the primary side flow $q_1$ only as described above for Figs. 1 to 6. If the primary side flow $q_1$ is uncontrollable by the flow control module 39 or if it has reached a maximum, the secondary side flows through the load elements 11a,b may be decreased to avoid a negative upward common line flow. The adaptation of the secondary side flows through the respective load elements 11a,b may be performed in different ways. One option would be a simultaneous decrease by the same absolute amount or the same relative amount with respect to the current secondary side flow. Another option would be to reduce only a highest of the secondary side flows, for instance only the fastest running half of speed-controllable secondary side pumps.

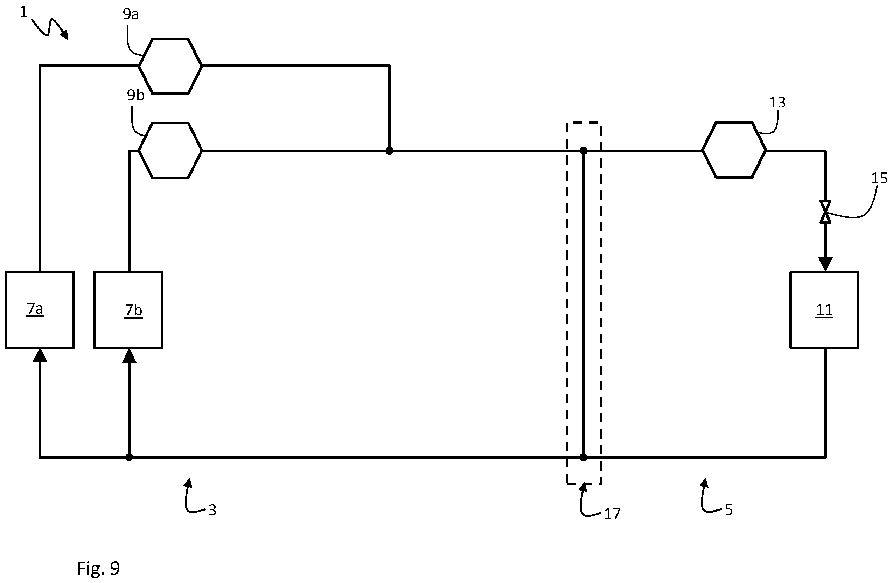

The system topology shown in Fig. 9 comprises a plurality of two parallel controllable primary side flow actuators 9a,b, each of which is associated with a source element 7a,b. There are again several options for controlling the primary side flows. A first option would be controlling the secondary side flow $q_2$ only as described above for Figs. 1 to 6. If the secondary side flow $q_2$ is uncontrollable by the flow control module 39 or if it has reached a minimum or if the signed deviation value is above the positive reference value indicating a positive downward common line flow, the primary side flows may be decreased to reduce the positive downward common line flow to a minimum. In case of a signed deviation value being below the negative reference value indicating a negative upward common line flow, the primary side flows may be increased to avoid or reduce the negative upward common line flow. The adaptation of the respective primary side flows through the source elements 7a,b may be performed in different ways. One option would be a simultaneous adaptation by the same absolute amount or the same relative amount with respect to the current primary side flow. Another option would be to operate as many of the controllable primary side flow actuators 9a,b with a minimum in terms of energy consumption of the associated source element 7a,b, and to adapt only as few as possible primary side flows provided by the controllable primary side flow actuators 9a,b.

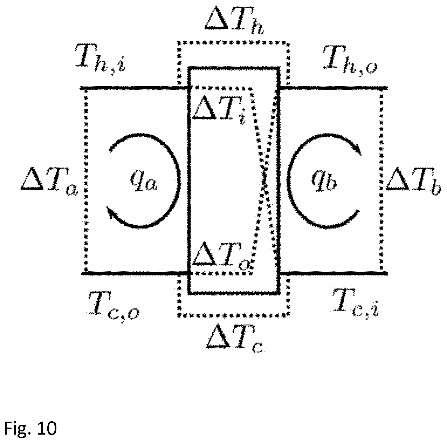

Fig. 10 explains schematically the relations between the temperatures at the four ports 21, 27, 31, 35 to the intermediary transfer element 17. The intermediary transfer element 17 may be a common line, a hydraulic separator, a tank or a counter-flow heat exchanger. The hydronic system 1 is here a heating system. The temperature $T_1$ at the first port 21 is denoted as $T_{h,l}$ in the sense of hot feed input into the intermediary transfer element 17. The temperature $T_2$ at the second port 27 is denoted as $T_{c,o}$ in the sense of cold return output of the intermediary transfer element 17. The temperature $T_3$ at the third port 31 is denoted as $T_{h,o}$, as hot feed output of the intermediary transfer element 17. The temperature $T_4$ at the fourth port 35 is denoted as $T_{c,i}$ in the sense of cold return input into the intermediary transfer element 17. The following relations apply:

$$\Delta T_h = T_{h,i} - T_{h,o}$$

$$\Delta T_c = T_{c,o} - T_{c,i}$$

$$\Delta T_i = T_{h,i} - T_{c,i}$$

$$\Delta T_o = T_{h,o} - T_{c,o}$$

$$\Delta T_a = T_{h,i} - T_{c,o}$$

$$\Delta T_b = T_{h,o} - T_{c,i}$$

$$\Delta T_a - \Delta T_i + \Delta T_b - \Delta T_o = 0$$

$$\Delta T_a - \Delta T_h - \Delta T_b + \Delta T_c = 0$$

$$\Delta\Delta T = \Delta T_o - \Delta T_i = \Delta T_c - \Delta T_h = \Delta T_a - \Delta T_b ,$$

wherein $\Delta\Delta T = \Delta T_2 - \Delta T_1$ may be the signed deviation value to be minimised. It shows that the first temperature differential $\Delta T_1$ may be $\Delta T_i$ $\Delta T_h$ or $\Delta T_b$ and the second temperature differential may be $\Delta T_o$, $\Delta T_c$ or $\Delta T_a$.

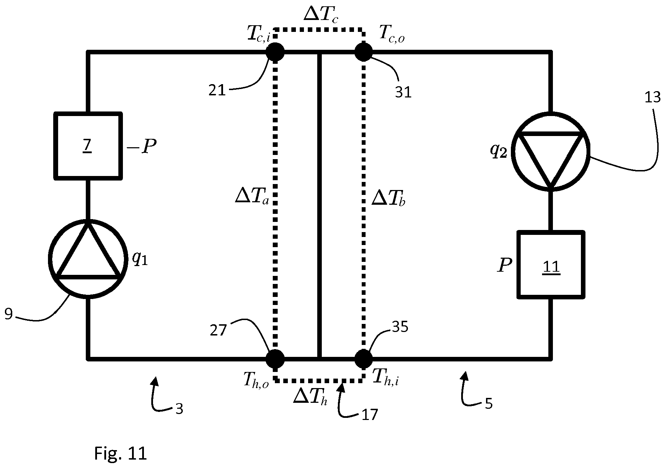

In Fig. 11, the measurement by the temperature sensors 45a-d (not shown in Fig. 11) is calibrated in specific flow situations to achieve a more accurate and more reliable flow control. The source element 7 is here a chiller or heat sink that takes away heat -P from the primary side 3, whereas the load element 11 consumes cooling power by adding heat P to the secondary side 5. Accordingly, the temperature $T_1$ at the first port 21 is denoted as $\Delta T_{c,l}$ in the sense of cool feed input into the intermediary transfer element 17. In Fig. 11, the temperature $T_1$ at the first port 21 is denoted as $\Delta T_{c,l}$ in the sense of cool feed input into the intermediary transfer element 17. The temperature $T_2$ at the second port 27 is denoted as $T_{h,o}$ in the sense of hot return output of the intermediary transfer element 17. The temperature $T_3$ at the third port 31 is denoted as $T_{c,o}$, as cold feed output of the intermediary transfer element 17. The temperature $T_4$ at the fourth port 35 is denoted as $T_{h,i}$ in the sense of hot return input into the intermediary transfer element 17. In hydronic systems as shown in Figs. 1 to 11, it is energetically efficient to minimise a heat transfer flow along the intermediary transfer device 17 in either direction upward or downward. However, the desirable situation of no upward or downward heat transfer flow along the intermediary transfer device 17 has the effect, in particular in case of a cooling system, that quite low temperature differentials $\Delta T_c = T_{c,i} - T_{c,o}$ and $\Delta T_h = T_{h,i} - T_{h,o}$ prevail.

Low temperature differentials $\Delta T_c$ and $\Delta T_h$ pose a challenge for the controlling process, because inaccurate temperature measurements may account for a large fraction of the measured temperature differentials. So, the controlling action may be mostly triggered by measurement errors rather than actual temperature differentials. If the control tries to minimise the upward or downward heat transfer flow along the intermediary transfer device 17 based on inaccurately measured temperature differentials, the flow is in fact not minimised.

It is therefore preferable to accurately measure the temperature differentials. This can, of course, be achieved by using very accurate and pre-calibrated sensors. However, this approach is expensive, dependent on sensor quality, and does not guarantee good performance over time as the quality of the sensors may degrade over time. As a solution to this, the measurements by the temperature sensors 45a-d are here repetitively calibrated "online" during their use in specific situations.

The main idea is to either force or identify a first or second situation where there is definitely more flow in one side than in the other side. For instance, in the first situation, the primary side 3 may have a higher flow $q_1$ than the secondary side 5, or vice versa in the second situation. If the primary flow $q_1$ is higher than the secondary flow $q_2$ in the first situation, the flow coming from the primary side 3 splits at the first port 21 into the secondary side 5 and the intermediary transfer element 17. This means that the flow entering from the primary side 3 into the secondary side 5 at the third port 31 has not been mixed with water of another temperature. Therefore, it must have the same temperature as the water leaving the primary side 3 at the first port 21 assuming the heat loss to the ambient environment is negligible. In this first situation, any measured temperature differential $\Delta T_c$ can be assumed to be fully due to sensor inaccuracy and stored as systematic error in form of an offset.

Such an offset can then simply be subtracted from all subsequent measurements of $\Delta T_c$, which means that the measurements by the temperature sensors 45a and 45c are calibrated for the purpose of the flow control. In the second situation, when the secondary side 5 has more flow than the primary side 3, i.e. $q_2 > q_1$, a similar situation arises in view of the temperature differential $\Delta T_h$ between the fourth port 35 and the second port 27. It should be zero, but the temperature sensors 45b and 45d may indicate a temperature differential $\Delta T_h$ based on sensor accuracy. In this second situation, any measured temperature differential $\Delta T_h$ can be assumed to be fully due to sensor inaccuracy and stored as systematic error in form of an offset. Such an offset can then simply be subtracted from all subsequent measurements of $\Delta T_h$, which means that the measurements by the temperature sensors 45b and 45d are calibrated for the purpose of the flow control.

These first or second situations, in which $q_2 > q_1$ or $q_2 < q_1$, may arise naturally during a normal operation of cooling cycles during the day in most hydronic systems. Therefore, there may not be a need to force the hydronic system into such situations, but merely to identify them. These situations can be identified by comparing the temperature differentials $\Delta T_c$ and $\Delta T_h$ with each other. If one temperature differential is much higher than the other, then the lower temperature differential can be assumed to be actually zero, even if it shows a non-zero value due to sensor inaccuracy. The measurement by the corresponding sensor pair can then be calibrated. For instance, if a certain pre-defined threshold on the signed deviation value $\Delta\Delta T = |\Delta T_c - \Delta T_h|$ is exceeded, a calibration situation is indicated.

In some hydronic systems, however, the flow imbalance is almost always to the same side, and hence one of the temperature differentials is always relatively high due to mixing from the intermediary element 17. Then, either the first or the second situation does not arise naturally in which the measurements by the corresponding temperature sensors could be calibrated. If a measurement of a pair of temperature sensors has not had the chance to be calibrated for a certain time, then it is preferable to force the hydronic system into that one of the first and second situation, which allows the needed calibration. This can be achieved by controlling the primary side flow actuator 9 and/or the secondary side flow actuator 13. For instance, the speed of pumps as primary/secondary side flow actuators 9, 11 may be adjusted to imbalance the primary/secondary flows for calibration purposes.

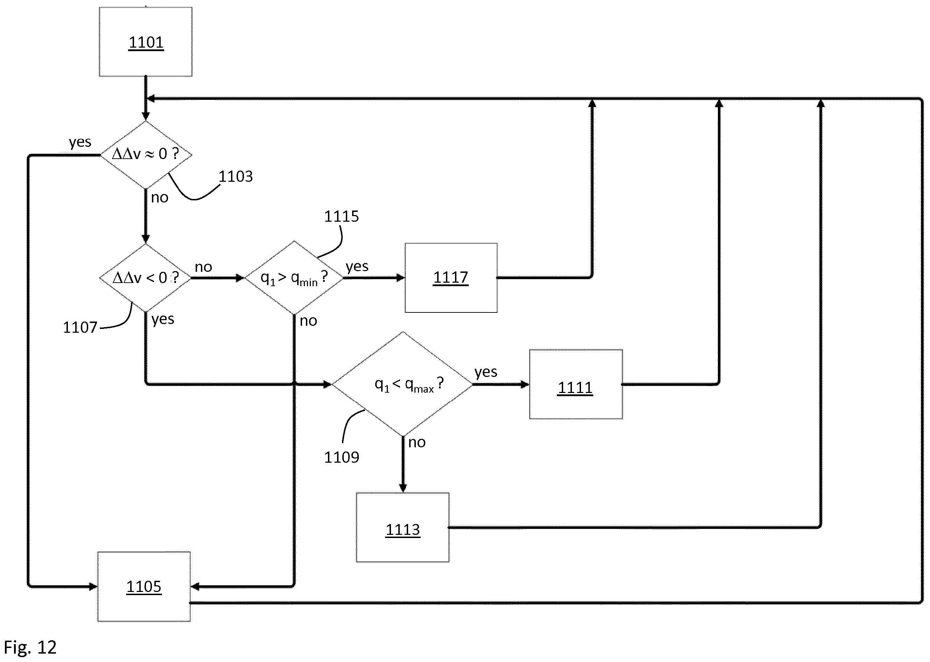

Fig. 12 shows a schematic figure of an example of the method for controlling the flow in the hydronic system 1, wherein both the controllable primary side flow actuator 9 and the controllable secondary side flow actuator 13 are controllable by the flow control module 39. The hydronic system 1 may start up by ramping up (step 1101) the primary side flow $q_1$ and the secondary side flow $q_2$ to initial flows by means of a variable speed drive (VSD) or a motorised valve. Once the hydronic system 1 is started, a signed deviation value $\Delta\Delta v$ is continuously or regularly determined and monitored by the flow control module 39 to check (step 1103) whether it is approximately zero, i.e. in a small band between a negative reference value and a positive reference value. As previously described, the signed deviation value $\Delta\Delta v$ may be a temperature differential $\Delta\Delta T$, a pressure differential $\Delta\Delta p$, a flow differential $\Delta q$, a pressure differential $\Delta p$ or a measured common line flow q.

If the signed deviation value $\Delta\Delta v$ is approximately zero, the flow control module 39 maintains (step 1105) the primary side flow $q_1$ and the secondary side flow $q_2$. It should be noted that the primary side flow $q_1$ and/or the secondary side flow $q_2$ may change due to other control schemes. For instance, an opening of a load valve 15 in the secondary side 5 indicating a higher thermal power demand of the load element(s) 11 in the secondary side 5 may trigger an automatic internal secondary side pump controller to increase the pump speed. However, the continuously or regularly determined and monitored signed deviation value $\Delta\Delta v$ may be affected by this, whereby the flow control module 39 may be caused to adapt the primary side flow $q_1$ and/or the secondary side flow $q_2$ accordingly.

If the signed deviation value $\Delta\Delta v$ is not approximately zero (step 1103), it is checked (step 1107) whether it is negative, i.e. below a negative reference value. If this is the case, it is checked (step 1109) if the primary side flow $q_1$ is below a predetermined maximal threshold $q_{max}$. The maximal threshold $q_{max}$ may, for instance, be determined by the maximum speed of a speed-controlled primary side pump, a maximal opening of a primary side valve or a maximal flow requirement of the source element 7. The primary side flow $q_1$ may be measured by a flow meter 53a or be deduced from the current speed or the current power consumption of a primary side pump. If a further increase of the primary side flow $q_1$ is possible and allowed, the primary side flow $q_1$ is increased (step 1111). The effect of this adaptation on the signed deviation value $\Delta\Delta v$ is again continuously or regularly determined and monitored by the flow control module 39 (step 1103). If a further increase of the primary side flow $q_1$ is not possible or not allowed, the secondary side flow $q_2$ is decreased (step 1113). Again, the effect of this adaptation on the signed deviation value $\Delta\Delta v$ is continuously or regularly determined and monitored by the flow control module 39 (step 1103).

If the signed deviation value $\Delta\Delta v$ is not approximately zero (step 1103) and positive, i.e. above a positive reference value (step 1107), it is checked (step 1115) if the primary side flow $q_1$ is above a predetermined minimal threshold $q_{min}$. The minimal threshold $q_{min}$ may, for instance, be determined by the minimum speed of a primary side pump, a minimal opening of a primary side valve or a minimal flow requirement of the source element 7. If a further decrease of the primary side flow $q_1$ is possible and allowed, the primary side flow $q_1$ is decreased (step 1117). The effect of this adaptation on the signed deviation value $\Delta\Delta v$ is again continuously or regularly determined and monitored by the flow control module 39 (step 1103).

**Claims**

1. A flow control module (39) for controlling the flow in a hydronic system (1), wherein the hydronic system (1) comprises

   - a primary side (3) with a first port (21) in fluid connection with an output (23) of at least one source element (7), a second port (27) in fluid connection with an input (29) of the at least one source element (7), and at least one controllable primary side flow actuator (9) for providing a primary side flow ($q_1$),
   - a secondary side (5) with a third port (31) in fluid connection with an input (33) of at least one load element (11), a fourth port (35) in fluid connection with an output (37) of the at least one load element (11), and at least one controllable secondary side flow actuator (13) for providing a secondary side flow ($q_2$), and
   - an intermediary transfer element (17) between the primary side (3) and the secondary side (5), wherein the intermediary transfer element (17) is in fluid connection with the first port (21), the second port (27), the third port (31) and the fourth port (35),

   **characterised in that**

   the flow control module (39) is configured to determine a measurement of a first temperature differential ($\Delta T_c$) between a temperature at the first port (21) and a temperature at the third port (31) in a first situation when the primary side flow ($q_1$) exceeds the secondary side flow ($q_2$) as a first offset value, and calibrate further measurements in the hydronic system by subtracting the first offset value from all subsequent measurements of the first temperature differential ($\Delta Tc$), to control the flow,
   and **in that** the flow control module (39) is configured to determine a measurement of a second temperature differential ($\Delta T_h$) between a temperature at the fourth port (35) and a temperature at the second port (27) in a second situation when the secondary side flow ($q_2$) exceeds the primary side flow ($q_1$) as a second offset value, and calibrate further measurements in the hydronic system by subtracting the second offset value from all subsequent measurements of the second temperature differential ($\Delta Th$), to control the flow.

**2.** The flow control module (39) according to claim 1, wherein the flow control module (39) is configured to force the hydronic system (1), for calibration purposes, into the first situation and/or second situation by controlling the primary side flow actuator (9) and/or the secondary side flow actuator (13).

**3.** The flow control module (39) according to any of the preceding claims, wherein the flow control module (39) is configured to identify the first situation and/or the second situation by comparing the first temperature differential ($\Delta T_c$) with the second temperature differential ($\Delta T_h$).

**4.** The flow control module (39) according to any of the preceding claims, wherein the flow control module (39) is configured to identify the first situation and/or the second situation when a certain pre-defined threshold on the absolute value of a signed deviation value ($\Delta\Delta T$) between the first temperature differential ($\Delta T_c$) and the second temperature differential ($\Delta T_h$) is exceeded.

**5.** The flow control module (39) according to any of the preceding claims, wherein the flow control module (39) is configured to adapt the thermal power transfer of the intermediary transfer element (17) by controlling, in a continuous or regularly closed-loop manner based on minimising a signed deviation value ($\Delta\Delta T$) being correlated with the thermal power transfer of the intermediary transfer element (17), the primary side flow ($q_1$) by means of the at least one controllable primary side flow actuator (9) and/or the secondary side flow ($q_2$) by means of the at least one controllable secondary side flow actuator (13).

**6.** The flow control module (39) according to claim 5, wherein the flow control module (39) is configured to maintain a current primary side flow ($q_1$) if the signed deviation value ($\Delta\Delta T$) is between a negative reference value and a positive reference value, preferably essentially zero.

**7.** The flow control module (39) according to claim 5 or 6, wherein the flow control module (39) is configured to increase the primary side flow ($q_1$) if the signed deviation value ($\Delta\Delta T$) is below a negative reference value.

**8.** The flow control module (39) according to any of the claims 5 to 7, wherein the flow control module (39) is configured to maintain the primary side flow ($q_1$) if the signed deviation value ($\Delta\Delta T$) is below a negative reference value and the primary side flow ($q_1$) is at or above a predetermined maximum threshold (qmax).

**9.** The flow control module (39) according to any of the claims 5 to 8, wherein the flow control module (39) is configured to decrease the secondary side flow ($q_2$) if the signed deviation value ($\Delta\Delta T$) is below a negative reference value and the primary side flow ($q_1$) cannot be increased.

**10.** The flow control module (39) according to any of the claims 5 to 9, wherein the flow control module (39) is configured to decrease the primary side flow ($q_1$) if the signed deviation value ($\Delta\Delta T$) is above a positive reference value.

**11.** The flow control module (39) according to any of the claims 5 to 10, wherein the flow control module (39) is configured to maintain a current primary side flow ($q_1$) if the signed deviation value ($\Delta\Delta T$) is above a positive reference value and the primary side flow ($q_1$) is at or below a predetermined minimum threshold ($q_{min}$).

**12.** The flow control module (39) according to any of the preceding claims, wherein the flow control module (39) is integrated in one of the at least one controllable primary side flow actuator (9) and/or one of the at least one controllable secondary side flow actuator (13).

**13.** The flow control module (39) according to any of the preceding claims, wherein the flow control module (39) is integrated in a cloud-based computer system and/or a building management system (BMS).

**14.** A method for controlling the flow in a hydronic system (1), wherein the hydronic system (1) comprises

- a primary side (3) having a first port (21) in fluid connection with an output (23) of at least one source element (7), a second port (27) in fluid connection with an input (29) of the at least one source element (7), and at least one controllable primary side flow actuator (9) for providing a primary side flow ($q_1$),
- a secondary side (5) having a third port (31) in fluid connection with an input (33) of at least one load element (11), a fourth port (35) in fluid connection with an output (37) of the at least one load element (11), and at least one controllable secondary side flow actuator (13) for providing a secondary side flow ($q_2$), and
- an intermediary transfer element (17) between the primary side (3) and the secondary side (5), wherein the intermediary transfer element is in fluid connection with the first port (21), the second port (27), the third port (31) and the fourth port (35),

**characterised by** the method comprising

determining a measurement of a first temperature differential ($\Delta T_c$) between a temperature at the first port (21) and a temperature at the third port (31) as a first offset value in a first situation when the primary side flow ($q_1$) exceeds the secondary side flow ($q_2$), and calibrating further measurements in the hydronic system by subtracting the first offset value from all subsequent measurements of the first temperature differential ($\Delta Tc$), to control the flow, and

determining a measurement of a second temperature differential ($\Delta T_h$) between a temperature at the fourth port (35) and a temperature at the second port (27) as a second offset value in a second situation when the secondary side flow ($q_2$) exceeds the primary side flow ($q_1$), and calibrating further measurements in the hydronic system by subtracting the second offset value from all subsequent measurements of the second temperature differential ($\Delta Th$), to control the flow.

15. The method according to claim 14, further comprising a step of forcing the hydronic system (1) into the first situation and/or second situation by controlling the primary side flow actuator (9) and/or the secondary side flow actuator (13) prior to the calibrating steps.

16. The method according to claim 14 or 15, further comprising a step of identifying the first situation and/or the second situation by comparing the first temperature differential ($\Delta T_c$) with the second temperature differential ($\Delta T_h$).

17. The method according to any of the claims 14 to 16, wherein the first situation and/or the second situation is identified when a certain pre-defined threshold on the absolute value of a signed deviation value ($\Delta\Delta T$) between the first temperature differential ($\Delta T_c$) and the second temperature differential ($\Delta T_h$) is exceeded.

18. The method according to any of the claims 14 to 17, further comprising a step of adapting the thermal power transfer of the intermediary transfer element (17) by controlling, in a continuous or regularly closed-loop manner based on minimising a signed deviation value ($\Delta\Delta T$) being correlated with the thermal power transfer of the intermediary transfer element (17), the primary side flow ($q_1$) by means of the at least one controllable primary side flow actuator (9) and/or the secondary side flow ($q_2$) by means of the at least one controllable secondary side flow actuator (13).

19. The method according to claim 18, wherein a current primary side flow ($q_1$) is maintained if the signed deviation value ($\Delta\Delta T$) is between a negative reference value and a positive reference value, preferably essentially zero.

20. The method according to claim 18 or 19, wherein the primary side flow ($q_1$) is increased if the signed deviation value ($\Delta\Delta T$) is below a negative reference value.

21. The method according to any of the claims 18 to 20, wherein the primary side flow ($q_1$) is maintained if the signed deviation value ($\Delta\Delta T$) is below a negative reference value and the primary side flow ($q_1$) is at or above a predetermined maximum threshold (qmax).

22. The method according to any of the claims 18 to 21, wherein the secondary side flow ($q_2$) is decreased if the signed deviation value ($\Delta\Delta T$) is below a negative reference value and the primary side flow ($q_1$) cannot be increased.

23. The method according to any of the claims 18 to 22, wherein the primary side flow ($q_1$) is decreased if the signed deviation value ($\Delta\Delta T$) is above a positive reference value.

24. The method according to any of the claims 18 to 23, wherein a current primary side flow ($q_1$) is maintained if the signed deviation value ($\Delta\Delta T$) is above a positive reference value and the primary side flow ($q_1$) is at or below a predetermined minimum threshold ($q_{min}$).

**Patentansprüche**

1. Strömungssteuermodul (39) zum Steuern der Strömung in einem hydronischen System (1), wobei das hydronische System (1) umfasst:

- eine Primärseite (3) mit einem ersten Durchlass (21) in Fluidverbindung mit einem Ausgang (23) von zumindest einem Quellenelement (7), einem zweiten Durchlass (27) in Fluidverbindung mit einem Eingang (29) des zumindest einen Quellenelements (7) und zumindest einem steuerbaren Primärseitenströmungsaktuator (9) zum Vorsehen einer Primärseitenströmung ($q_1$),

- eine Sekundärseite (5) mit einem dritten Durchlass (31) in Fluidverbindung mit einem Eingang (33) von zumindest einem Lastelement (11), einem vierten Durchlass (35) in Fluidverbindung mit einem Ausgang (37) des zumindest einen Lastelements (11) und zumindest einem steuerbaren Sekundärseitenströmungsaktuator (13) zum Vorsehen einer Sekundärseitenströmung ($q_2$), und

- ein zwischenliegendes Übertragungselement (17) zwischen der Primärseite (3) und der Sekundärseite (5), wobei das zwischenliegende Übertragungselement (17) in Fluidverbindung mit dem ersten Durchlass (21), dem zweiten Durchlass (27), dem dritten Durchlass (31) und dem vierten Durchlass (35) steht,

**dadurch gekennzeichnet, dass**

das Strömungssteuermodul (39) zum Bestimmen einer Messung einer ersten Temperaturdifferenz ($\Delta T_c$) zwischen einer Temperatur am ersten Durchlass (21) und einer Temperatur am dritten Durchlass (31) in einer ersten Situation, in der die Primärseitenströmung ($q_1$) die Sekundärseitenströmung ($q_2$) übersteigt, als einen ersten Versatzwert und Kalibrieren weiterer Messungen im hydronischen System durch Subtrahieren des ersten Versatzwerts von allen nachfolgenden Messungen der ersten Temperaturdifferenz ($\Delta T_c$) konfiguriert ist, um die Strömung zu steuern,
und dass das Strömungssteuermodul (39) zum Bestimmen einer Messung einer zweiten Temperaturdifferenz ($\Delta T_h$) zwischen einer Temperatur am vierten Durchlass (35) und einer Temperatur am zweiten Durchlass (27) in einer zweiten Situation, in der die Sekundärseitenströmung ($q_2$) die Primärseitenströmung ($q_1$) übersteigt, als einen zweiten Versatzwert und Kalibrieren weiterer Messungen im hydronischen System durch Subtrahieren des zweiten Versatzwerts von allen nachfolgenden Messungen der zweiten Temperaturdifferenz ($\Delta T_h$) konfiguriert ist, um die Strömung zu steuern.

2. Strömungssteuermodul (39) nach Anspruch 1, wobei das Strömungssteuermodul (39) zum Zwingen des hydronischen Systems (1), zu Kalibrationszwecken, in die erste Situation und/oder zweite Situation durch Steuern des Primärseitenströmungsaktuators (9) und/oder des Sekundärseitenströmungsaktuators (13) konfiguriert ist.

3. Strömungssteuermodul (39) nach einem der vorhergehenden Ansprüche, wobei das Strömungssteuermodul (39) zum Identifizieren der ersten Situation und/oder der zweiten Situation durch Vergleichen der ersten Temperaturdifferenz ($\Delta T_c$) mit der zweiten Temperaturdifferenz ($\Delta T_h$) konfiguriert ist.

4. Strömungssteuermodul (39) nach einem der vorhergehenden Ansprüche, wobei das Strömungssteuermodul (39) zum Identifizieren der ersten Situation und/oder der zweiten Situation konfiguriert ist, wenn eine bestimmte vordefinierte Schwelle des Absolutwerts eines Abweichungswerts mit Vorzeichen ($\Delta\Delta T$) zwischen der ersten Temperaturdifferenz ($\Delta T_c$) und der zweiten Temperaturdifferenz ($\Delta T_h$) überstiegen wird.

5. Strömungssteuermodul (39) nach einem der vorhergehenden Ansprüche, wobei das Strömungssteuermodul (39) zum Anpassen der Wärmeleistungsübertragung des zwischenliegenden Übertragungselements (17) durch Steuern, auf fortlaufende oder regelmäßig geschlossene Art und Weise, basierend auf dem Minimieren eines Abweichungswerts mit Vorzeichen ($\Delta\Delta T$), der mit der Wärmeleistungsübertragung des zwischenliegenden Übertragungselements (17) korreliert ist, der Primärseitenströmung (q1) mithilfe des zumindest einen steuerbaren Primärseitenströmungsaktuators (9) und/oder der Sekundärseitenströmung ($q_2$) mithilfe des zumindest einen Sekundärseitenströmungsaktuators (13) konfiguriert ist.

6. Strömungssteuermodul (39) nach Anspruch 5, wobei das Strömungssteuermodul (39) zum Beibehalten einer aktuellen Primärseitenströmung ($q_1$) konfiguriert ist, wenn der Abweichungswert mit Vorzeichen ($\Delta\Delta T$) zwischen einem negativen Referenzwert und einem positiven Referenzwert liegt, vorzugsweise im Wesentlichen Null ist.

7. Strömungssteuermodul (39) nach Anspruch 5 oder 6, wobei das Strömungssteuermodul (39) zum Erhöhen der Primärseitenströmung ($q_1$) konfiguriert ist, wenn der Abweichungswert mit Vorzeichen ($\Delta\Delta T$) unterhalb eines negativen Referenzwerts liegt.

8. Strömungssteuermodul (39) nach einem der Ansprüche 5 bis 7, wobei das Strömungssteuermodul (39) zum Beibehalten der Primärseitenströmung ($q_1$) konfiguriert ist, wenn der Abweichungswert mit Vorzeichen ($\Delta\Delta T$) unterhalb

eines negativen Referenzwerts liegt und die Primärseitenströmung ($q_1$) auf oder über einer vorbestimmten Maximalschwelle ($q_{max}$) liegt.

9. Strömungssteuermodul (39) nach einem der Ansprüche 5 bis 8, wobei das Strömungssteuermodul (39) zum Herabsetzen der Sekundärseitenströmung ($q_2$) konfiguriert ist, wenn der Abweichungswert mit Vorzeichen ($\Delta\Delta T$) unterhalb eines negativen Referenzwerts liegt und die Primärseitenströmung ($q_1$) nicht erhöht werden kann.

10. Strömungssteuermodul (39) nach einem der Ansprüche 5 bis 9, wobei das Strömungssteuermodul (39) zum Herabsetzen der Primärseitenströmung ($q_1$) konfiguriert ist, wenn der Abweichungswert mit Vorzeichen ($\Delta\Delta T$) über einem positiven Referenzwert liegt.

11. Strömungssteuermodul (39) nach einem der Ansprüche 5 bis 10, wobei das Strömungssteuermodul (39) zum Beibehalten einer aktuellen Primärseitenströmung ($q_1$) konfiguriert ist, wenn der Abweichungswert mit Vorzeichen ($\Delta\Delta T$) über einem positiven Referenzwert liegt und die Primärseitenströmung ($q_1$) auf oder unterhalb einer vorbestimmten Minimalschwelle ($q_{min}$) liegt.

12. Strömungssteuermodul (39) nach einem der vorhergehenden Ansprüche, wobei das Strömungssteuermodul (39) in einen des zumindest einen steuerbaren Primärseitenströmungsaktuators (9) und/oder einen des zumindest einen Sekundärseitenströmungsaktuators (13) eingegliedert ist.

13. Strömungssteuermodul (39) nach einem der vorhergehenden Ansprüche, wobei das Strömungssteuermodul (39) in ein Cloudbasiertes Computersystem und/oder ein Gebäudeverwaltungssystem (BMS) eingegliedert ist.

14. Verfahren zum Steuern der Strömung in einem hydronischen System (1), wobei das hydronische System (1) umfasst:

   - eine Primärseite (3) mit einem ersten Durchlass (21) in Fluidverbindung mit einem Ausgang (23) von zumindest einem Quellenelement (7), einem zweiten Durchlass (27) in Fluidverbindung mit einem Eingang (29) des zumindest einen Quellenelements (7) und zumindest einem steuerbaren Primärseitenströmungsaktuator (9) zum Vorsehen einer Primärseitenströmung ($q_1$),
   - eine Sekundärseite (5) mit einem dritten Durchlass (31) in Fluidverbindung mit einem Eingang (33) von zumindest einem Lastelement (11), einem vierten Durchlass (35) in Fluidverbindung mit einem Ausgang (37) des zumindest einen Lastelements (11) und zumindest einem steuerbaren Sekundärseitenströmungsaktuator (13) zum Vorsehen einer Sekundärseitenströmung ($q_2$), und
   - ein zwischenliegendes Übertragungselement (17) zwischen der Primärseite (3) und der Sekundärseite (5), wobei das zwischenliegende Übertragungselement (17) in Fluidverbindung mit dem ersten Durchlass (21), dem zweiten Durchlass (27), dem dritten Durchlass (31) und dem vierten Durchlass (35) steht, **dadurch gekennzeichnet, dass** das Verfahren umfasst:

   Bestimmen einer Messung einer ersten Temperaturdifferenz ($\Delta T_c$) zwischen einer Temperatur am ersten Durchlass (21) und einer Temperatur am dritten Durchlass (31) als einen ersten Versatzwert in einer ersten Situation, in der die Primärseitenströmung ($q_1$) die Sekundärseitenströmung ($q_2$) übersteigt, und Kalibrieren weiterer Messungen im hydronischen System durch Subtrahieren des ersten Versatzwerts von allen nachfolgenden Messungen der ersten Temperaturdifferenz ($\Delta T_c$), um die Strömung zu steuern, und Bestimmen einer Messung einer zweiten Temperaturdifferenz ($\Delta T_h$) zwischen einer Temperatur am vierten Durchlass (35) und einer Temperatur am zweiten Durchlass (27) als einen zweiten Versatzwert in einer zweiten Situation, in der die Sekundärseitenströmung ($q_2$) die Primärseitenströmung ($q_1$) übersteigt, und Kalibrieren weiterer Messungen im hydronischen System durch Subtrahieren des zweiten Versatzwerts von allen nachfolgenden Messungen der zweiten Temperaturdifferenz ($\Delta T_h$), um die Strömung zu steuern.

15. Verfahren nach Anspruch 14, ferner umfassend einen Schritt des Zwingens des hydronischen Systems (1) in die erste Situation und/oder zweite Situation durch Steuern des Primärseitenströmungsaktuators (9) und/oder des Sekundärseitenströmungsaktuators (13) vor den Kalibrationschritten.

16. Verfahren nach Anspruch 14 oder 15, ferner umfassend einen Schritt des Identifizierens der ersten Situation und/oder der zweiten Situation durch Vergleichen der ersten Temperaturdifferenz ($\Delta T_c$) mit der zweiten Temperaturdifferenz ($\Delta T_h$).

17. Verfahren nach einem der Ansprüche 14 bis 16, wobei die erste Situation und/oder die zweite Situation identifiziert wird, wenn eine bestimmte vordefinierte Schwelle des Absolutwerts eines Abweichungswerts mit Vorzeichen ($\Delta\Delta T$) zwischen der ersten Temperaturdifferenz ($\Delta T_c$) und der zweiten Temperaturdifferenz ($\Delta T_h$) überstiegen wird.

18. Verfahren nach einem der Ansprüche 14 bis 17, ferner umfassend einen Schritt des Anpassens der Wörmeleistungsübertragung des zwischenliegenden Übertragungselements (17) durch Steuern, auf fortlaufende oder regelmäßig geschlossene Art und Weise, basierend auf dem Minimieren eines Abweichungswerts mit Vorzeichen ($\Delta\Delta T$), der mit der Wärmeleistungsübertragung des zwischenliegenden Übertragungselements (17) korreliert ist, der Primörseitenströmung ($q_1$) mithilfe des zumindest einen steuerbaren Primärseitenströmungsaktuators (9) und/oder der Sekundärseitenströmung ($q_2$) mithilfe des zumindest einen Sekundärseitenströmungsaktuators (13).

19. Verfahren nach Anspruch 18, wobei eine aktuelle Primärseitenströmung ($q_1$) beibehalten wird, wenn der Abweichungswert mit Vorzeichen ($\Delta\Delta T$) zwischen einem negativen Referenzwert und einem positiven Referenzwert liegt, vorzugsweise im Wesentlichen Null ist.

20. Verfahren nach Anspruch 18 oder 19, wobei die Primärseitenströmung ($q_1$) erhöht wird, wenn der Abweichungswert mit Vorzeichen ($\Delta\Delta T$) unterhalb eines negativen Referenzwerts liegt.

21. Verfahren nach einem der Ansprüche 18 bis 20, wobei die Primärseitenströmung ($q_1$) beibehalten wird, wenn der Abweichungswert mit Vorzeichen ($\Delta\Delta T$) unterhalb eines negativen Referenzwerts liegt und die Primärseitenströmung ($q_1$) auf oder über einer vorbestimmten Maximalschwelle ($q_{max}$) liegt.

22. Verfahren nach einem der Ansprüche 18 bis 21, wobei die Sekundärseitenströmung ($q_2$) herabgesetzt wird, wenn der Abweichungswert mit Vorzeichen ($\Delta\Delta T$) unterhalb eines negativen Referenzwerts liegt und die Primärseitenströmung ($q_1$) nicht erhöht werden kann.

23. Verfahren nach einem der Ansprüche 18 bis 22, wobei die Primärseitenströmung ($q_1$) herabgesetzt wird, wenn der Abweichungswert mit Vorzeichen ($\Delta\Delta T$) über einem positiven Referenzwert liegt.

24. Verfahren nach einem der Ansprüche 18 bis 23, wobei eine aktuelle Primärseitenströmung ($q_1$) beibehalten wird, wenn der Abweichungswert mit Vorzeichen ($\Delta\Delta T$) über einem positiven Referenzwert liegt und die Primärseitenströmung ($q_1$) auf oder unterhalb einer vorbestimmten Minimalschwelle ($q_{min}$) liegt.

**Revendications**

1. Module de commande d'écoulement (39) pour réguler l'écoulement dans un système hydronique (1), dans lequel le système hydronique (1) comprend :

   - un côté primaire (3) avec un premier orifice (21) en liaison fluidique avec une sortie (23) d'au moins un élément de source (7), un deuxième orifice (27) en liaison fluidique avec une entrée (29) de l'au moins un élément de source (7), et au moins un actionneur d'écoulement de côté primaire commandable (9) pour fournir un écoulement de côté primaire ($q_1$),
   - un côté secondaire (5) avec un troisième orifice (31) en liaison fluidique avec une entrée (33) d'au moins un élément de charge (11), un quatrième orifice (35) en liaison fluidique avec une sortie (37) de l'au moins un élément de charge (11), et au moins un actionneur d'écoulement de côté secondaire commandable (13) pour fournir un écoulement de côté secondaire ($q_2$), et
   - un élément de transfert intermédiaire (17) entre le côté primaire (3) et le côté secondaire (5), dans lequel l'élément de transfert intermédiaire (17) est en liaison fluidique avec le premier orifice (21), le deuxième orifice (27), le troisième orifice (31) et le quatrième orifice (35),

   **caractérisé en ce que**

   le module de commande d'écoulement (39) est configuré pour déterminer une mesure d'un premier différentiel de température ($\Delta T_c$) entre une température au premier orifice (21) et une température au troisième orifice (31) dans une première situation quand l'écoulement de côté primaire ($q_1$) dépasse l'écoulement de côté secondaire ($q_2$) en tant qu'une première valeur de décalage, et étalonner d'autres mesures dans le système hydronique par la soustraction de la première valeur de décalage à toutes les mesures ultérieures du premier différentiel de température ($\Delta T_c$), pour réguler l'écoulement,

et **en ce que** le module de commande d'écoulement (39) est configuré pour déterminer une mesure d'un deuxième différentiel de température ($\Delta T_h$) entre une température au quatrième orifice (35) et une température au deuxième orifice (27) dans une deuxième situation quand l'écoulement de côté secondaire ($q_2$) dépasse l'écoulement de côté primaire ($q_1$) en tant qu'une deuxième valeur de décalage, et étalonner d'autres mesures dans le système hydronique par la soustraction de la deuxième valeur de décalage à toutes les mesures ultérieures du deuxième différentiel de température ($\Delta T_h$), pour réguler l'écoulement.

2. Module de commande d'écoulement (39) selon la revendication 1, dans lequel le module de commande d'écoulement (39) est configuré pour forcer le système hydronique (1), à des fins d'étalonnage, dans la première situation et/ou la deuxième situation en commandant l'actionneur d'écoulement de côté primaire (9) et/ou l'actionneur d'écoulement de côté secondaire (13).

3. Module de commande d'écoulement (39) selon l'une quelconque des revendications précédentes, dans lequel le module de commande d'écoulement (39) est configuré pour identifier la première situation et/ou la deuxième situation par la comparaison du premier différentiel de température ($\Delta T_c$) au deuxième différentiel de température ($\Delta T_h$).

4. Module de commande d'écoulement (39) selon l'une quelconque des revendications précédentes, dans lequel le module de commande d'écoulement (39) est configuré pour identifier la première situation et/ou la deuxième situation lorsqu'un certain seuil prédéfini de la valeur absolue d'une valeur d'écart signée ($\Delta\Delta T$) entre le premier différentiel de température ($\Delta T_c$) et le deuxième différentiel de température ($\Delta T_h$) est dépassé.

5. Module de commande d'écoulement (39) selon l'une quelconque des revendications précédentes, dans lequel le module de commande d'écoulement (39) est configuré pour adapter le transfert d'énergie thermique de l'élément de transfert intermédiaire (17) par la commande, d'une manière continue ou en boucle régulièrement fermée sur la base de la minimisation d'une valeur d'écart signée ($\Delta\Delta T$) qui est corrélée avec le transfert d'énergie thermique de l'élément de transfert intermédiaire (17), de l'écoulement de côté primaire ($q_1$) au moyen de l'au moins un actionneur d'écoulement de côté primaire commandable (9) et/ou de l'écoulement de côté secondaire ($q_2$) au moyen de l'au moins un actionneur d'écoulement de côté secondaire commandable (13).

6. Module de commande d'écoulement (39) selon la revendication 5, dans lequel le module de commande d'écoulement (39) est configuré pour maintenir un écoulement de côté primaire ($q_1$) actuel si la valeur d'écart signée ($\Delta\Delta T$) est entre une valeur de référence négative et une valeur de référence positive, de préférence sensiblement nulle.

7. Module de commande d'écoulement (39) selon la revendication 5 ou 6, dans lequel le module de commande d'écoulement (39) est configuré pour augmenter l'écoulement de côté primaire ($q_1$) si la valeur d'écart signée ($\Delta\Delta T$) est inférieure à une valeur de référence négative.

8. Module de commande d'écoulement (39) selon l'une quelconque des revendications 5 à 7, dans lequel le module de commande d'écoulement (39) est configuré pour maintenir l'écoulement de côté primaire ($q_1$) si la valeur d'écart signée ($\Delta\Delta T$) est inférieure à une valeur de référence négative et l'écoulement de côté primaire ($q_1$) est supérieur ou égal à un seuil maximal prédéterminé ($q_{max}$).

9. Module de commande d'écoulement (39) selon l'une quelconque des revendications 5 à 8, dans lequel le module de commande d'écoulement (39) est configuré pour réduire l'écoulement de côté secondaire ($q_2$) si la valeur d'écart signée ($\Delta\Delta T$) est inférieure à une valeur de référence négative et l'écoulement de côté primaire ($q_1$) ne peut pas être augmenté.

10. Module de commande d'écoulement (39) selon l'une quelconque des revendications 5 à 9, dans lequel le module de commande d'écoulement (39) est configuré pour réduire l'écoulement de côté primaire ($q_1$) si la valeur d'écart signée ($\Delta\Delta T$) est supérieure à une valeur de référence positive.

11. Module de commande d'écoulement (39) selon l'une quelconque des revendications 5 à 10, dans lequel le module de commande d'écoulement (39) est configuré pour maintenir un écoulement de côté primaire ($q_1$) actuel si la valeur d'écart signée ($\Delta\Delta T$) est supérieure à une valeur de référence positive et l'écoulement de côté primaire ($q_1$) est inférieur ou égal à un seuil minimal prédéterminé ($q_{min}$).

12. Module de commande d'écoulement (39) selon l'une quelconque des revendications précédentes, dans lequel le module de commande d'écoulement (39) est intégré à l'un de l'au moins un actionneur d'écoulement de côté primaire commandable (9) et/ou à l'un de l'au moins un actionneur d'écoulement de côté secondaire commandable (13).

13. Module de commande d'écoulement (39) selon l'une quelconque des revendications précédentes, dans lequel le module de commande d'écoulement (39) est intégré à un système informatique basé sur le cloud et/ou à un système de gestion de bâtiment (BMS).

14. Procédé de commande de l'écoulement dans un système hydronique (1), dans lequel le système hydronique (1) comprend :

- un côté primaire (3) comportant un premier orifice (21) en liaison fluidique avec une sortie (23) d'au moins un élément de source (7), un deuxième orifice (27) en liaison fluidique avec une entrée (29) de l'au moins un élément de source (7), et au moins un actionneur d'écoulement de côté primaire commandable (9) pour fournir un écoulement de côté primaire ($q_1$),
- un côté secondaire (5) comportant un troisième orifice (31) en liaison fluidique avec une entrée (33) d'au moins un élément de charge (11), un quatrième orifice (35) en liaison fluidique avec une sortie (37) de l'au moins un élément de charge (11), et au moins un actionneur d'écoulement de côté secondaire commandable (13) pour fournir un écoulement de côté secondaire ($q_2$), et
- un élément de transfert intermédiaire (17) entre le côté primaire (3) et le côté secondaire (5), dans lequel l'élément de transfert intermédiaire (17) est en liaison fluidique avec le premier orifice (21), le deuxième orifice (27), le troisième orifice (31) et le quatrième orifice (35),

**caractérisé en ce que** le procédé comprend

la détermination d'une mesure d'un premier différentiel de température ($\Delta T_c$) entre une température au premier orifice (21) et une température au troisième orifice (31) en tant qu'une première valeur de décalage dans une première situation quand l'écoulement de côté primaire ($q_1$) dépasse l'écoulement de côté secondaire ($q_2$), et l'étalonnage d'autres mesures dans le système hydronique par la soustraction de la première valeur de décalage à toutes les mesures ultérieures du premier différentiel de température ($\Delta T_c$), pour réguler l'écoulement, et la détermination d'une mesure d'un deuxième différentiel de température ($\Delta T_h$) entre une température au quatrième orifice (35) et une température au deuxième orifice (27) en tant qu'une deuxième valeur de décalage dans une deuxième situation quand l'écoulement de côté secondaire ($q_2$) dépasse l'écoulement de côté primaire ($q_1$), et l'étalonnage d'autres mesures dans le système hydronique par la soustraction de la deuxième valeur de décalage à toutes les mesures ultérieures du deuxième différentiel de température ($\Delta T_h$), pour réguler l'écoulement.

15. Procédé selon la revendication 14, comprenant en outre une étape pour forcer le système hydronique (1) dans la première situation et/ou la deuxième situation en commandant l'actionneur d'écoulement de côté primaire (9) et/ou l'actionneur d'écoulement de côté secondaire (13) avant les étapes d'étalonnage.

16. Procédé selon la revendication 14 ou 15, comprenant en outre une étape pour identifier la première situation et/ou la deuxième situation par la comparaison du premier différentiel de température ($\Delta T_c$) au deuxième différentiel de température ($\Delta T_h$).

17. Procédé selon l'une quelconque des revendications 14 à 16, dans lequel la première situation et/ou la deuxième situation sont identifiées lorsqu'un certain seuil prédéfini de la valeur absolue d'une valeur d'écart signée ($\Delta\Delta T$) entre le premier différentiel de température ($\Delta T_c$) et le deuxième différentiel de température ($\Delta T_h$) est dépassé.

18. Procédé selon l'une quelconque des revendications 14 à 17, comprenant en outre une étape pour adapter le transfert d'énergie thermique de l'élément de transfert intermédiaire (17) par la commande, d'une manière continue ou en boucle régulièrement fermée sur la base de la minimisation d'une valeur d'écart signée ($\Delta\Delta T$) qui est corrélée avec le transfert d'énergie thermique de l'élément de transfert intermédiaire (17), de l'écoulement de côté primaire ($q_1$) au moyen de l'au moins un actionneur d'écoulement de côté primaire commandable (9) et/ou de l'écoulement de côté secondaire ($q_2$) au moyen de l'au moins un actionneur d'écoulement de côté secondaire commandable (13).

19. Procédé selon la revendication 18, dans lequel un écoulement de côté primaire ($q_1$) actuel est maintenu si la valeur d'écart signée ($\Delta\Delta T$) est entre une valeur de référence négative et une valeur de référence positive, de préférence sensiblement nulle.

**20.** Procédé selon la revendication 18 ou 19, dans lequel l'écoulement de côté primaire ($q_1$) est augmenté si la valeur d'écart signée ($\Delta\Delta T$) est inférieure à une valeur de référence négative.

**21.** Procédé selon l'une quelconque des revendications 18 à 20, dans lequel l'écoulement de côté primaire ($q_1$) est maintenu si la valeur d'écart signée ($\Delta\Delta T$) est inférieure à une valeur de référence négative et l'écoulement de côté primaire ($q_1$) est supérieur ou égal à un seuil maximal prédéterminé ($q_{max}$).

**22.** Procédé selon l'une quelconque des revendications 18 à 21, dans lequel l'écoulement de côté secondaire ($q_2$) est réduit si la valeur d'écart signée ($\Delta\Delta T$) est inférieure à une valeur de référence négative et l'écoulement de côté primaire ($q_1$) ne peut pas être augmenté.

**23.** Procédé selon l'une quelconque des revendications 18 à 22, dans lequel l'écoulement de côté primaire ($q_1$) est réduit si la valeur d'écart signée ($\Delta\Delta T$) est supérieure à une valeur de référence positive.

**24.** Procédé selon l'une quelconque des revendications 18 à 23, dans lequel un écoulement de côté primaire ($q_1$) actuel est maintenu si la valeur d'écart signée ($\Delta\Delta T$) est supérieure à une valeur de référence positive et l'écoulement de côté primaire ($q_1$) est inférieur ou égal à un seuil minimal prédéterminé ($q_{min}$).

Fig. 1a

Fig. 1b

Fig. 1

Fig. 2

Fig. 3

Fig. 4

Fig. 5

Fig. 6

EP 3 751 381 B1

Fig. 7

Fig. 8

EP 3 751 381 B1

Fig. 9

Fig. 10

Fig. 11

Fig. 12

**EP 3 751 381 B1**

**REFERENCES CITED IN THE DESCRIPTION**

**Patent documents cited in the description**

- US 8774978 B2
- EP 2918961 A1
- US 2018238645 A1